# EUROPEAN PATENT SPECIFICATION

(11) **EP 4 375 946 B1**
(45) Date of publication and mention of the grant of the patent: **09.09.2026**
(21) Application number: 23789217.9
(22) Date of filing: 26.09.2023
(51) Int. Cl.: G06V 40/18, G06V 20/20, G06T 7/11, G06F 3/01, G02B 27/01, G06F 3/16

(54) **AUGMENTED REALITY DEVICE AND METHOD FOR IDENTIFYING OBJECT WITHIN IMAGE**
VORRICHTUNG FÜR ERWEITERTE REALITÄT UND VERFAHREN ZUR IDENTIFIZIERUNG EINES OBJEKTS IN EINEM BILD
DISPOSITIF DE RÉALITÉ AUGMENTÉE ET PROCÉDÉ D'IDENTIFICATION D'OBJET DANS UNE IMAGE

(30) Priority: 28.09.2022 KR 20220123469; 21.10.2022 KR 20220136174
(43) Date of publication of application: 29.05.2024
(73) Proprietor: Samsung Electronics Co., Ltd., Suwon-si, Gyeonggi-do 16677 (KR)
(72) Inventor: PARK, Hyunbin, Suwon-si, Gyeonggi-do 16677 (KR); SEO, Jeongwook, Suwon-si, Gyeonggi-do 16677 (KR); LEE, Junhyuk, Suwon-si, Gyeonggi-do 16677 (KR); PARK, Sangwook, Suwon-si, Gyeonggi-do 16677 (KR); NGUYEN, Duy Thanh, Suwon-si, Gyeonggi-do 16677 (KR)
(74) Representative: HGF
(86) International application number: PCT/KR2023/014848
(87) International publication number: WO 2024/072009

(56) References cited:
- WO-A1-2022/139230
- KR-A- 20190 109 336
- KR-A- 20210 091 394
- KR-A- 20220 019 963
- KR-A- 20220 076 398
- KR-A- 20220 110 417
- US-A1- 2021 089 124
- US-A1- 2021 150 192
- US-A1- 2024 086 743

## Description

### [Technical Field]

The disclosure relates to an augmented reality device and method for identifying an object in an image.

### [Background Art]

An augmented reality device is a device capable of expressing augmented reality, and generally includes not only a glasses-shaped augmented reality device worn on a face of a user, but also a head-mounted display apparatus (HMD), an augmented-reality helmet, and the like, which are worn on the head. The augmented reality device has limitations in terms of mounting space and thus there is a limitation to increasing battery capacity of the augmented reality device. Further, since the augmented reality device lacks space for installing chips, the augmented reality device may be manufactured with limited computing power and memory size. Accordingly, augmented reality devices may need to utilize devices using high-end neural processing units (NPUs), such as smartphones and servers, in order to provide various services based on augmented reality.
US 2021/089124 A1, in the abstract, relates to resolving natural language ambiguities with respect to a simulated reality setting. In an exemplary embodiment, a simulated reality setting having one or more virtual objects is displayed. A stream of gaze events is generated from the simulated reality setting and a stream of gaze data. A speech input is received within a time period and a domain is determined based on a text representation of the speech input. Based on the time period and a plurality of event times for the stream of gaze events, one or more gaze events are identified from the stream of gaze events. The identified one or more gaze events is used to determine a parameter value for an unresolved parameter of the domain. A set of tasks representing a user intent for the speech input is determined based on the parameter value and the set of tasks is performed.
WO 2022/139230 A1, in the abstract, provides a method for operating a terminal in a wireless communication system. An example of the present disclosure may comprise the steps of: receiving information on at least one of a first split point and a second split point from a base station; performing a first split inference on the basis of the first split point, and generating first intermediate data; transmitting the first intermediate data to the base station; receiving second intermediate data generated on the basis of the second split point from the base station; performing the remaining split inferences from the second split point on the basis of the second intermediate data; and adjusting the second split point on the basis of the second intermediate data.

### [Disclosure of Invention]

### [Solution to Problem]

A first aspect of the present invention provides a method in accordance with claim 1.

Further, a second aspect of the present invention provides an augmented reality device in accordance with claim 11.

In addition, a third aspect of the present invention provides a computer-readable recording medium in accordance with claim 15.

### [Brief Description of Drawings]

FIG. 1 is a schematic diagram of a system for enabling an augmented reality device to recognize an object in an image according to an embodiment;
FIG. 2 illustrates a situation in which an augmented reality device recognizes an object in an image according to an embodiment;
FIG. 3 is a flowchart illustrating a method for acquiring a result of object recognition for a partial image including an object corresponding to a user's gaze direction by an augmented reality device according to an embodiment;
FIG. 4 is a flowchart illustrating a method for identifying a condition of providing a service related to object recognition by an augmented reality device according to an embodiment;
FIG. 5 illustrates an example in which a size of a partial image, a device for object recognition, and an artificial intelligence model for object recognition are determined by considering a condition of providing a service to be provided to a user according to an embodiment;
FIG. 6 is a flowchart illustrating a method for recognizing, by an augmented reality device, an object in a partial image by using at least one of an augmented reality device or an external electronic device according to an embodiment;
FIG. 7 is a flowchart illustrating a method for recognizing, by an augmented reality device, an object in a partial image by using at least one of an augmented reality device, an external electronic device, or a server according to an embodiment;
FIG. 8 illustrates an example in which an augmented reality device recognizes an object using an augmented reality device or an external electronic device according to a service providing condition according to an embodiment;
FIG. 9 illustrates an example in which an augmented reality device recognizes an object using an augmented reality device or a server according to a service providing condition according to an embodiment;
FIG. 10 illustrates an example of recognizing an object by an augmented reality device interworking with an external electronic device and a server according to an embodiment;
FIG. 11 illustrates an example of recognizing text in an image by an augmented reality device according to an embodiment;
FIG. 12 illustrates an example in which an augmented reality device selects an artificial intelligence model and a device for object recognition based on a location of the augmented reality device according to an embodiment;
FIG. 13 illustrates an example in which an augmented reality device selects an artificial intelligence model and a device for object recognition based on a location of the augmented reality device according to an embodiment;
FIG. 14 illustrates an example in which an augmented reality device acquires a partial image based on a sound obtained by the augmented reality device according to an embodiment;
FIG. 15 is a schematic diagram of a system for enabling an augmented reality device to recognize an object in an image when the augmented reality device does not support processing of an artificial intelligence model according to an embodiment;
FIG. 16 is a flowchart illustrating a method in which an augmented reality device acquires a result of object recognition for a partial image including an object corresponding to a user's gaze direction when the augmented reality device does not support processing of an artificial intelligence model according to an embodiment;
FIG. 17 is a flowchart illustrating a method in which an augmented reality device recognizes an object in a partial image by using at least one of an external electronic device and a server when the augmented reality device does not support processing of an artificial intelligence model according to an embodiment;
FIG. 18 is a block diagram of an augmented reality device according to an embodiment; and
FIG. 19 is a block diagram of an electronic device in a network environment according to various embodiments.
FIG. 20 is a flowchart illustrating a method for acquiring, for providing a service, a result related to an object corresponding to a user's gaze by an augmented reality device according to an embodiment.

### [Best Mode for Carrying out the Invention]

Hereinafter, embodiments of the disclosure will be described in detail so that those skilled in the art may easily practice them with reference to the accompanying drawings. However, the disclosure may be realized in many different forms and is not limited to the embodiments described herein. Further, in order to clearly describe the disclosure in the drawings, parts irrelevant to the description are omitted, and similar reference numerals are attached to similar parts throughout the specification.

The terms used in the disclosure has been described as general terms that are currently used by considering the functions mentioned in the disclosure. However, this may imply various other terms depending on the intention or precedent of a person skilled in the art, the appearance of new technologies, and the like. Therefore, the terms used in the disclosure should not be interpreted only as the names of the terms, but should be interpreted based on the meanings of the terms and the contents throughout the disclosure.

In addition, the terms such as "the first", "the second", and the like may be used to describe various elements, but elements should not be limited by these terms. These terms are used to distinguish one element from another.

Throughout the specification, when an element is referred to as being "connected to" another element, this includes not only the case of being "directly connected to" the other element, but also the case of being "electrically connected to" the other element with an intervening element therebetween. In addition, when an element is referred to as "including" another element, unless otherwise stated, the element may further include yet another element rather than exclude the yet other element.

The appearances of phrases such as "in an embodiment" in various places in this disclosure are not necessarily all referring to the same embodiment.

An embodiment of the disclosure may be represented as functional block configurations and various processing stages. Some or all of these functional blocks may be realized by various numbers of hardware and/or software components that perform specific functions. For example, functional blocks of the disclosure may be realized by one or more microprocessors or circuit configurations for a predetermined function. In addition, for example, the functional blocks of this disclosure may be realized in various programming or scripting languages. Functional blocks may be realized as an algorithm running on one or more processors. In addition, the disclosure may employ prior art for electronic environment configuration, signal processing, and/or data processing. Terms such as "mechanism", "element", "means" and "configuration" may be used broadly and are not limited to mechanical and physical configurations.

In addition, connecting lines or connecting members between elements shown in the drawings are only examples of functional connections and/or physical or circuit connections. In an actual device, connections between elements may be represented by various functional connections, physical connections, or circuit connections that may be replaced or added.

Hereinafter, the disclosure will be described in detail with reference to the accompanying drawings.

In the disclosure, 'augmented reality (AR)' refers to showing a virtual image in a physical environment space of the real world or showing a real object and a virtual image together.

In addition, an 'augmented reality device' refers to a device capable of expressing 'augmented reality', and the augmented reality device generally includes not only a glasses-shaped augmented reality device worn on a face of a user, but also a head-mounted display apparatus (HMD), an augmented-reality helmet, and the like, which are worn on the head.

Meanwhile, a 'real scene' is a scene of the real world that a user sees through an augmented reality device, and may include a real world object. In addition, a 'virtual image' is an image generated through an optical engine and may include both static and dynamic images. Such a virtual image is observed together with a real scene, and may be an image representing information about a real object in a real scene, information about an operation of an augmented reality device, or a control menu.

Therefore, a typical augmented reality device includes an optical engine for generating a virtual image configured by light generated from a light source, and a waveguide formed of a transparent material that guides the virtual image generated by the optical engine to the user's eyes and allows the user to see the scene of the real world as well. As described above, the augmented reality device should be able to observe the scene of the real world, and thus in order to guide the light generated by the optical engine to the user's eyes through the wave guide, an optical element for changing an optical path having straightness basically is required. In this case, the optical path may be changed using reflection by a mirror or the like, or the optical path may be changed via diffraction by a diffraction element such as a diffractive optical element (DOE) or a holographic optical element (HOE), but is not limited thereto.

Functions related to artificial intelligence according to the disclosure are operated through a processor and a memory. The processor may include one or multiple processors. In this case, the one or more processors may be a general-purpose processor such as a CPU, an AP, or a digital signal processor (DSP), a graphics-only processor such as a GPU or a vision processing unit (VPU), or an artificial intelligence-only processor such as an NPU. One or more processors perform control to process input data according to predefined operating rules stored in a memory or artificial intelligence models. Alternatively, when one or more processors are processors dedicated to artificial intelligence, the processors dedicated to artificial intelligence may be designed with a hardware structure specialized for processing a specific artificial intelligence model.

A predefined action rule or artificial intelligence model is characterized by being generated through learning. Here, generation through learning implies that a basic artificial intelligence model is learned using multiple pieces of learning data by a learning algorithm, so that the predefined action rule or artificial intelligence model configured to perform a desired characteristic (or purpose) is generated. Such learning may be performed in a device on which artificial intelligence according to the disclosure is performed, or may be performed through a separate server and/or system. Examples of the learning algorithm include supervised learning, unsupervised learning, semi-supervised learning, or reinforcement learning, but are not limited to the above-described examples.

The artificial intelligence model may be configured by multiple neural network layers. An artificial intelligence model may be composed of multiple neural network layers. Each of the multiple neural network layers has multiple weight values, and a neural network operation is performed through an operation between multiple weight values and an operation result of a previous layer. Multiple weights possessed by multiple neural network layers may be optimized by a learning result of an artificial intelligence model. For example, multiple weights may be updated so that a loss value or a cost value obtained from an artificial intelligence model is reduced or minimized during a learning process. The artificial neural network may include a deep neural network (DNN), for example, a convolutional neural network (CNN), a deep neural network (DNN), a recurrent neural network (RNN), a restricted Boltzmann machine (RBM), a deep belief network (DBN), a bidirectional recurrent deep neural network (BRDNN), or deep Q-networks, but is not limited to the above examples.

A method for identifying an object in an image by an augmented reality device according to an embodiment of the disclosure may include acquiring a captured image, identifying a user's gaze, identifying performance information of the augmented reality device and performance information of an external electronic device connected to the augmented reality device, selecting a device for recognizing the object from among the augmented reality device and the external electronic device, based on the performance information of the augmented reality device and the performance information of the external electronic device, selecting an artificial intelligence model to recognize the object, based on the performance information of the augmented reality device and the performance information of the external electronic device, acquiring a partial image including the object related to the user's gaze from the captured image, and acquiring a recognition result of the object from the partial image by using the selected device and the selected artificial intelligence model.

Further, the method may further include identifying a condition of providing a service to be provided to the user, wherein the selecting of the artificial intelligence model includes selecting an artificial intelligence model to recognize the object from among multiple artificial intelligence models trained to recognize the object, based on the condition of providing the service, the performance information of the augmented reality device, and the performance information of the external electronic device.

In addition, the partial image may have a size corresponding to the selected artificial intelligence model.

In addition, the multiple artificial intelligence models may be configured to process the partial image by using different computational amounts.

In addition, for object recognition with regard to multiple captured images including the captured image, at least one of a device for recognizing the object or an artificial intelligence model to recognize the object is changeable based on the condition of providing the service, and the size of the partial image may be changed as at least one of the device for recognizing the object and the artificial intelligence model to recognize the object is changed.

In addition, the multiple artificial intelligence models may be configured to process the partial image by using different computational amounts.

In addition, the multiple artificial intelligence models may be configured such that the number of bits of an output value of an activation function and the number of bits of a weight configured between the layers are different from each other.

In addition, the identifying of the condition of providing the service may include identifying the service providing condition based on at least one of an attribute of a service to be provided to the user, a type of an application executed in relation to the recognition of the object, or a voice input of a user requesting recognition of the object.

In addition, the condition of providing the service may be determined based on the accuracy and real-time capability of the recognition result of the object.

In addition, the method may further include identifying a resolution of an input image configured for the selected artificial intelligence model.

In addition, the acquiring of the partial image may include cropping the partial image from the captured image so that the partial image has the identified resolution.

In addition, the performance information of the augmented reality device and the performance information of the external electronic device may include a specification of at least one of a neural processing unit (NPU), a central processing unit (CPU), or a graphics processing unit (GPU) capable of executing at least one of the plurality of artificial intelligence models.

In addition, when the selected device is the augmented reality device, the selected artificial intelligence model includes a first artificial intelligence model stored in the augmented reality device, and the acquiring of the recognition result of the object may include recognizing the object in the partial image by applying the partial image to the first artificial intelligence model.

In addition, when the selected device is the external electronic device, the selected artificial intelligence model includes a second artificial intelligence model stored in the external electronic device, and the acquiring of the recognition result of the object may include transmitting the partial image to the external electronic device, and receiving, from the external electronic device, the recognition result of the object acquired by the external electronic device due to application of the partial image to the second artificial intelligence model.

In addition, the method further includes identifying a communication state of the augmented reality device, and the selecting of a device for recognizing the object may include selecting a device for recognizing the object from among the augmented reality device and the external electronic device based on the communication state.

In addition, the selecting of an artificial intelligence model to recognize the partial image may include selecting an artificial intelligence model to recognize the partial image based on the communication state.

An augmented reality device for identifying an object in an image according to an embodiment of the disclosure may include a communication interface configured to communicate with an external electronic device, a camera, a gaze tracking sensor configured to detect a user's gaze, a memory configured to store instructions, and a processor operatively connected to the communication interface, the camera, the gaze tracking sensor, and the memory, and configured to execute the instructions, wherein the processor executes the instructions to acquire a captured image, control the gaze tracking sensor to identify a user's gaze, identify performance information of the augmented reality device and performance information of an external electronic device connected to the augmented reality device, select a device for recognizing the object from among the augmented reality device and the external electronic device, based on the performance information of the augmented reality device and the performance information of the external electronic device, select an artificial intelligence model to recognize the object, based on the performance information of the augmented reality device and the performance information of the external electronic device, acquire a partial image including the object related to the user's gaze from the captured image, and acquire a recognition result of the object from the partial image by using the selected device and the selected artificial intelligence model.

In addition, the processor may be configured to execute the instructions to identify a condition of providing a service to be provided to the user.

In addition, the processor may be configured to execute the instructions to select an artificial intelligence model to recognize the object from among multiple artificial intelligence models trained to recognize the object, based on the condition of providing the service, the performance information of the augmented reality device, and the performance information of the external electronic device.

In addition, the partial image has a size corresponding to the selected artificial intelligence model.

In addition, for object recognition with regard to multiple captured images including the captured image, at least one of a device for recognizing the object or an artificial intelligence model to recognize the object is changeable based on the condition of providing the service, and the size of the partial image may be changed as at least one of the device for recognizing the object and the artificial intelligence model to recognize the object is changed.

According to an embodiment of the disclosure, provided may be a computer-readable recording medium in which a program for executing a method for identifying an object in an image is recorded, the program including instructions which, when executed, cause the medium to perform operations including acquiring a captured image, identifying a user's gaze, identifying performance information of the augmented reality device and performance information of an external electronic device connected to the augmented reality device, selecting a device for recognizing the object from among the augmented reality device and the external electronic device, based on the performance information of the augmented reality device and the performance information of the external electronic device, selecting an artificial intelligence model to recognize the object, based on the performance information of the augmented reality device and the performance information of the external electronic device, acquiring a partial image including the object related to the user's gaze from the captured image, and acquiring a recognition result of the object from the partial image by using the selected device and the selected artificial intelligence model.

A method performed by an augmented reality device according to an embodiment of the disclosure may include acquiring (300, 300-1), via the camera, a captured image of a physical environment surrounding the AR device, the captured image including an object in the physical environment; receiving a voice input (300, 300-2) from a user of the AR device; identifying (310, 310-1) a gaze of the user; identifying (320, 320-1) a service related to the object included in the captured image, to be performed based on the voice input and the gaze of the user; identifying (320, 320-2) a condition for providing the service, wherein the condition for providing the service is related to at least one of target accuracy of the service, target latency of the service, a computation demand on the AR device, or a communication state of the AR device; based on the condition for providing the service, selecting (340, 340-1) one of an artificial intelligence model in the AR device, an artificial intelligence model in an external electronic device connected to the AR device, or an artificial intelligence model in a server; acquiring (360, 360-1) a result relating to the object from the selected artificial intelligence model; and providing the service to the user.

An augmented reality device according to an embodiment of the disclosure may include a communication interface (1600) configured to communicate with an external electronic device (2000); a camera (1400); a gaze tracking sensor (1500) configured to detect a gaze of a user; a processor(1800); and memory (1700) storing instructions that, when executed by the processor, cause the AR device to: acquire (300, 300-1), via the camera, a captured image of a physical environment surrounding the AR device, the captured image including an object in the physical environment; identify (310, 310-1) the gaze of the user; receive a voice input (300, 300-2); identify (320, 320-1) a service related to the object included in the captured image, to be performed based on the voice input and the gaze of the user; identify (320, 320-2) a condition for providing the service, wherein the condition for providing the service is related to at least one of target accuracy of the service, target latency of the service, a computation demand on the AR device, or a communication state of the AR device; based on the condition for providing the service, select (340, 340-1) one of an artificial intelligence model in the AR device, an artificial intelligence model in an external electronic device connected to the AR device, or an artificial intelligence model in a server; acquire (360, 360-1) a result relating to the object from the selected artificial intelligence model; and provide the service to the user.

According to an embodiment of the disclosure, provided may be a computer-readable recording medium in which a program for executing a method is recorded, the program including instructions which, when executed, cause the medium to perform operations including acquiring (300, 300-1), via a camera, a captured image of a physical environment surrounding an augmented reality (AR) device, the captured image including an object in the physical environment; receive (300, 300-2)a voice input from a user of the AR device; identifying (310, 310-1) a gaze of a user; identifying (320, 320-1) a service related to the object included in the captured image, to be performed based on the voice input and the gaze of the user; identifying (320, 320-2) a condition for providing the service, wherein the condition for providing the service is related to at least one of target accuracy of the service, target latency of the service, a computation demand on the AR device, or a communication state of the AR device; based on the condition for providing the service, selecting (340, 340-1) one of an artificial intelligence model in the AR device, an artificial intelligence model in an external electronic device connected to the AR device, or an artificial intelligence model in a server; acquiring (360, 360-1) a result relating to the object from the selected artificial intelligence model; and providing the service to the user.

Accordingly, the augmented reality device may select an appropriate artificial intelligence model from among artificial intelligence models having different computational amounts by considering whether a service related to object recognition should be provided accurately or quickly. In addition, since the augmented reality device may efficiently select an augmented reality device and an external electronic device to recognize an object, the augmented reality device may quickly recognize an object in a captured image and provide a service to a user.

In addition, since the augmented reality device is configured to crop a partial image, which is to be input to the artificial intelligence model, based on the user's gaze from a captured image and use, an image containing unwanted objects is not input to the artificial intelligence model, and accurate recognition of the object may be performed.

In addition, since the augmented reality device is configured to crop a partial image, which is to be input to the artificial intelligence model, from a captured image and use, it is possible to reduce the amount of computation for object recognition processing.

In addition, the augmented reality device may appropriately adjust the amount of computation for recognizing objects according to situations, and accordingly, it is possible to provide high-quality real-time services to users.

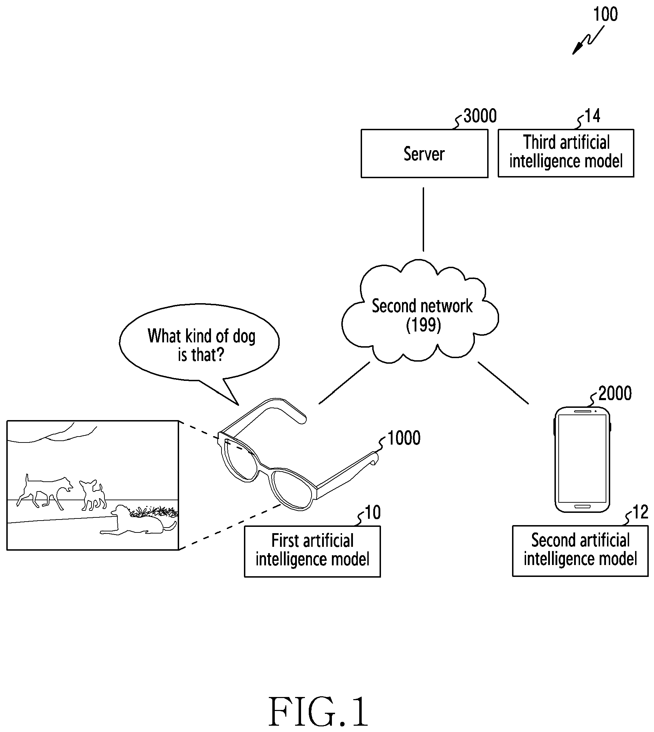

FIG. 1 is a schematic diagram of a system for enabling an augmented reality device to recognize an object in an image according to an embodiment.

Referring to FIG. 1, a system 100 for recognizing an object in an image may include an augmented reality device 1000, an external electronic device 2000, and a server 3000.

The augmented reality device 1000 may be configured to capture (for example, capture a still or moving image) an object around the augmented reality device 1000 (for example, in an environment around the augmented reality device 1000) and interwork with at least one of the external electronic device 2000 or the server 3000, so as to recognize an object in the captured image. The augmented reality device 1000 may be configured to recognize an object in the captured image by using at least one of the augmented reality device 1000, the external electronic device 2000, and the server 3000, according to a service providing condition of a service provided to the user based on a result of the recognition of the object in the captured image.

The augmented reality device 1000 may include at least one first artificial intelligence model 10 trained for object recognition, the external electronic device 2000 may include at least one second artificial intelligence model 20 trained for object recognition, and the server 3000 may include at least one third artificial intelligence model 30 trained for object recognition. Object recognition may include, for example, at least one of identifying a type of an object, detecting the object, or identifying a location of the object. Object recognition may include, for example, at least one of detecting a gesture of a user's hand and identifying a type of gesture (for example, the gesture of the user's hand may be detected and the type of gesture the detected gesture corresponds to may be identified).

The first artificial intelligence model 10, the second artificial intelligence model 20, and the third artificial intelligence model 30 may each recognize an object in a captured image by using different computational amounts. The first artificial intelligence model 10 may recognize an object in the captured image by using a first amount of computation, the second artificial intelligence model 20 may recognize an object in the captured image by using a second amount of computation, and the third artificial intelligence model 30 may recognize an object in a captured image by using a third amount of computation.

The first amount of computation of the first artificial intelligence model 10 may be less than the second amount of computation of the second artificial intelligence model 20, and the second amount of computation of the second artificial intelligence model 20 may be less than the third amount of computation of the third artificial intelligence model 30. The first number of bits of a parameter of the first artificial intelligence model 10 may be smaller than the second number of bits of a parameter of the second artificial intelligence model 20, and the second number of bits of the parameter of the second artificial intelligence model 20 may be smaller than the third number of bits of a parameter of the third artificial intelligence model 30. Parameters of the artificial intelligence model may be parameters of a neural network included in the artificial intelligence model, and may include, for example, an activation parameter and a weight parameter, but are not limited thereto.

The augmented reality device 1000 may be configured to recognize an object in a captured image by using the first artificial intelligence model 10 of the augmented reality device 1000 when real-time capability of a service to be provided to a user is important. The augmented reality device 1000 may be configured to recognize an object in a captured image by using at least one of the second artificial intelligence model 20 and the third artificial intelligence model 30 when accuracy of a service to be provided to the user is important.

When an artificial intelligence model to be used for recognizing an object is determined among the first artificial intelligence model 10, the second artificial intelligence model 20, and the third artificial intelligence model 30, the augmented reality device 1000 may be configured to crop a partial image including an object from the captured image and input the partial image to the determined artificial intelligence model, so as to obtain an object recognition result based on the determined artificial intelligence model.

The augmented reality device 1000 may be configured to be a wearable device, having a communication function and a data processing function, such as glasses and a hair band. However, the augmented reality device 1000 is not limited thereto, and may include all types of devices configured to provide augmented reality services including a camera.

The external electronic device 2000 is a device capable of storing the second artificial intelligence model 20 and communicating with the augmented reality device 1000 and the server 3000, and may include, for example, a smartphone, a tablet PC, a PC, a smart TV, a cell phone, a personal digital assistant (PDA), a laptop, a media player, a micro server, a global positioning system (GPS) device, a digital broadcasting terminal, navigation, kiosk, home appliance, and other mobile or non-mobile computing device, but may not be limited thereto. According to an embodiment, the external electronic device 2000 is connected to the augmented reality device 1000 through a short-range wireless communication.

The server 3000 is a device capable of storing the third artificial intelligence model 30 and communicating with at least one of the augmented reality device 1000 and the external electronic device 2000, and may be a network device capable of recognizing an object in a captured image by using the third artificial intelligence model 30. According to an embodiment, the server is connected to at least one of the external electronic device 2000 and the augmented reality device 1000 through long-range wireless communication.

The network may be realized by a wired network such as a local area network (LAN), a wide area network (WAN), or a value added network (VAN), or all kinds of wireless network such as a mobile radio communication network or a satellite communication network. In addition, the network may include a combination of at least two of a local area network (LAN), a wide area network (WAN), a value-added network (VAN), a mobile communication network, or a satellite communication network, and the network is a data communication network in a comprehensive sense that enables network configuration entities to communicate smoothly with each other, and includes wired Internet, wireless Internet, and mobile wireless communication network. Wireless communication may include, for example, wireless LAN (Wi-Fi), Bluetooth, Bluetooth low energy, Zigbee, Wi-Fi Direct (WFD), ultra-wideband (UWB), infrared communication (infrared data association (IrDA), near field communication (NFC), etc., but may not be limited thereto.

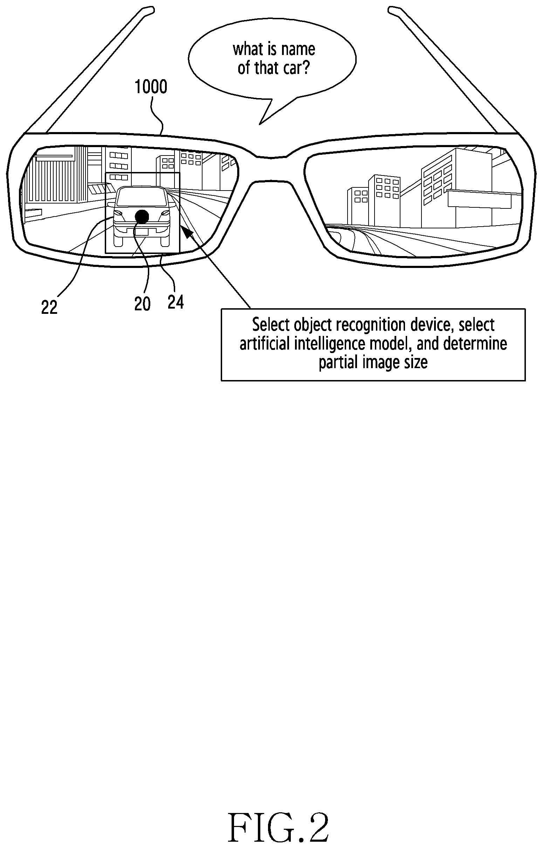

FIG. 2 illustrates a situation in which an augmented reality device recognizes an object in an image according to an embodiment.

Referring to FIG. 2, a user wearing an augmented reality device 1000 may be configured to input an input command to the augmented reality device 1000, the input command requesting a service related to an object 22 of the real world. For example, the user may input a voice input command "what is the name of that car?" into the augmented reality device 1000. The augmented reality device 1000 may be configured to capture (an image of) the object 22 of the real world in response to a user's input command, and may select a device and/or artificial intelligence model for recognizing the object 22 from the captured image. In addition, the augmented reality device 1000 may be configured to crop a partial image 24 including an object 22 corresponding to the user's gaze 20 from the captured image, and recognize the object 22 from the partial image 24 by using the selected artificial intelligence model. For example, the augmented reality device 1000 may be configured to crop the partial image 24 of a predetermined area based on the user's gaze 20 from the captured image.

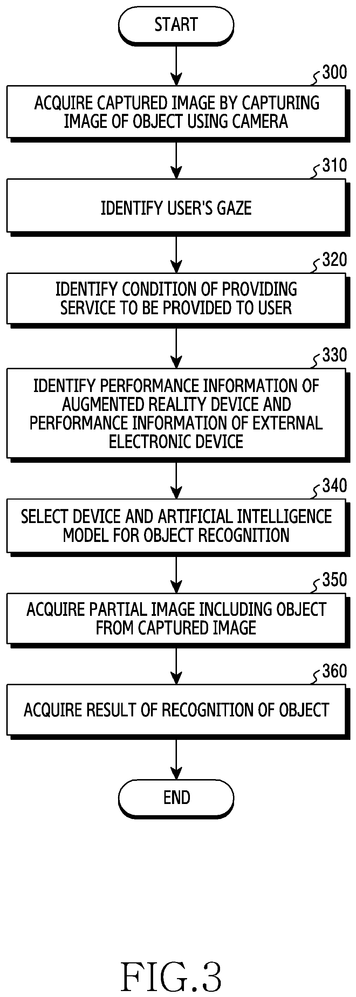

FIG. 3 is a flowchart illustrating a method for acquiring a result of object recognition for a partial image including an object corresponding to a user's gaze direction by an augmented reality device according to an embodiment.

In operation 300, the augmented reality device 1000 may be configured to acquire a captured image by capturing an image of an object using a camera. The augmented reality device 1000 may be configured to capture an image of an object of the real world using a camera installed toward the front of the augmented reality device 1000. For example, the augmented reality device 1000 may be configured to acquire a still image or a moving image by capturing an image of an object by controlling a camera when an application requesting a photographing function is executed. For example, the augmented reality device 1000 may be configured to acquire a still image or a moving image by capturing an image of an object by controlling a camera when a user's input command requesting a service requiring a photographing function is received.

In operation 310, the augmented reality device 1000 may be configured to identify the user's gaze. For example, the augmented reality device 1000 may be configured to detect the user's gaze using a gaze tracking sensor installed in a direction toward the user's eyes. Detecting the user's gaze may include acquiring gaze information related to the user's gaze. The gaze tracking sensor may include, for example, at least one of an IR scanner or an image sensor, and when the augmented reality device 1000 is a glasses-type device, multiple gaze tracking sensors may be respectively arranged toward the user's eyes around a left display and a right display of the augmented reality device 1000 (for example, the left display and right display may correspond to a left lens and right lens of the glasses-type device, respectively).

According to an embodiment, the augmented reality device 1000 may be configured to identify a user's gaze detected by using the gaze tracking sensor, and may identify an object corresponding to the user's gaze from a captured image (for example, an image may be captured which corresponds to an image viewable to the user, using the augmented reality device 1000, wherein the image may include the object; the object may then be identified from the captured image).

For example, the augmented reality device 1000 may be configured to sense the user's eyes at a predetermined time interval and identify the user's gaze in case that an application requesting a photographing function is executed. For example, the augmented reality device 1000 may be configured to sense the user's eyes and identify the user's gaze in case that the user's input command requesting a service requiring a photographing function is received. For example, the augmented reality device 1000 may be configured to sense the user's eyes and identify the user's gaze such that when a photographing function is required to be executed, an image which corresponds to the user's gaze can be captured in real time.

In operation 320, the augmented reality device 1000 may be configured to identify a condition of providing a service to be provided to the user. The condition of providing the service (for example, the service providing condition) may be a preset condition necessary to provide a high-quality service to the user. For example, the service providing condition may be a condition set in relation to arithmetic processing of an image for object recognition and/or object identification. According to an embodiment, the service providing condition may be configured in advance according to predetermined standards in order to provide high-quality services to users, and may be configured differently, for example, depending on whether accuracy of the service is important or real-time capability of the service is important. Conditions for providing services may include, for example, conditions related to a target accuracy, a target latency, a computation demand, and/or a communication state. For example, the target accuracy may include a degree to accurately recognize an object (for example, the target accuracy may include a required level of detail for recognizing the object and, if the target accuracy includes a high level of detail, the augmented reality device 1000 may be configured to recognize the object using at least one of the second artificial intelligence model 20 and the third artificial intelligence model 30), the target latency may include waiting time required for object recognition, and the computation demand may include the amount of computation of an artificial intelligence model to be used for object recognition (for example, if the computation demand includes an amount of computation which is too high for the first artificial intelligence model 10, the augmented reality device 1000 may be configured to recognize the object using at least one of the second artificial intelligence model 20 and the third artificial intelligence model 30). For example, the target accuracy may be digitized and configured by an accuracy level to be described later, and the target latency may be digitized and configured by a real-time level to be described later, but is not limited thereto.

The augmented reality device 1000 may be configured to identify a service providing condition based on, for example, at least one of a type of service to be provided to the user, a type of an application executed in relation to the recognition of the object, or a user's input command requesting recognition of the object.

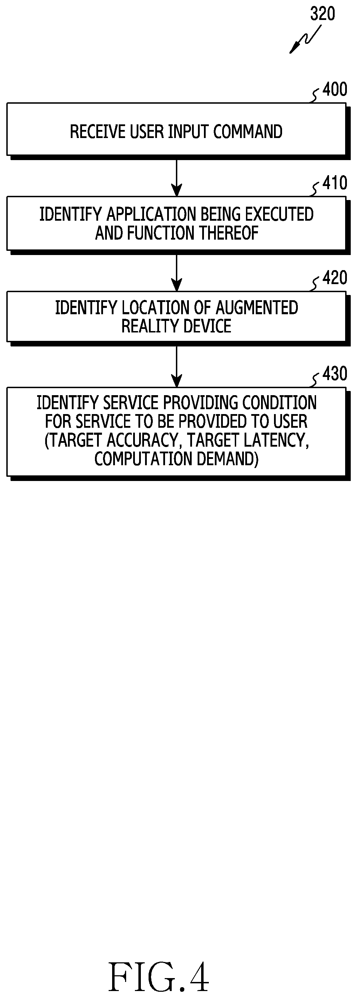

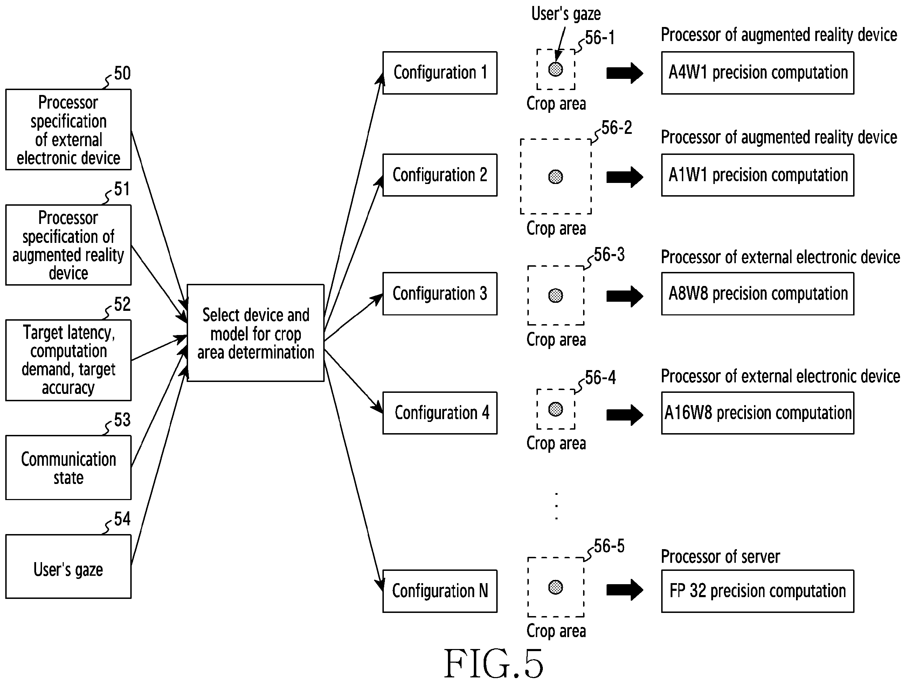

A service providing condition and an example in which the augmented reality device 1000 may be configured to identify the service providing condition will be described in more detail with reference to FIGS. 4 and 5.

In operation 330, the augmented reality device 1000 may be configured to identify performance information of the augmented reality device 1000 and performance information of the external electronic device 2000. The performance information of the augmented reality device 1000 and/or the external electronic device 2000 may include hardware performance information of the augmented reality device 1000 and/or the external electronic device 2000. The performance information of the augmented reality device 1000 and/or the external electronic device 2000 may include information about the performance of processes such as the CPU, NPU, and GPU of the augmented reality device 1000 and/or the external electronic device 2000. In addition, the performance information of the augmented reality device 1000 and/or the external electronic device 2000 may include a type of memory (e.g., SRAM and/or DRAM) within the augmented reality device 1000 and/or the external electronic device 2000, and information about the capacity of the memory.

The performance information of the augmented reality device 1000 may include specification information of a processor to execute the first artificial intelligence model 10. For example, the performance information of the augmented reality device 1000 may include specification information of an NPU of the augmented reality device 1000 to execute the first artificial intelligence model 10. The specification information of the NPU of the augmented reality device 1000 may include information about an amount of computation that may be processed by the NPU of the augmented reality device 1000. For example, the specification information of the NPU of the augmented reality device 1000 may include an identification value of an artificial intelligence model that may be processed by the NPU of the augmented reality device 1000, the precision of the artificial intelligence model, the accuracy of the artificial intelligence model, and/or information about the amount of computation of the artificial intelligence model. When the augmented reality device 1000 does not include an NPU, specification information of the CPU and/or GPU of the augmented reality device 1000 may be used to determine performance of the augmented reality device 1000.

The performance information of the external electronic device 2000 may include specification information of a processor configured to execute the second artificial intelligence model 20. For example, the performance information of the external electronic device 2000 may include specification information of the NPU of the external electronic device 2000 configured to execute the first artificial intelligence model 10. The specification information of the NPU of the external electronic device 2000 may include information about an amount of computation that may be processed by the NPU of the external electronic device 2000. For example, the specification information of the NPU of the external electronic device 2000 may include an identification value of an artificial intelligence model that may be processed by the NPU of the external electronic device 2000, the precision of the artificial intelligence model, the accuracy of the artificial intelligence model, and/or information about the amount of computation of the artificial intelligence model. When the external electronic device 2000 does not include an NPU, specification information of the CPU and/or GPU of the external electronic device 2000 may be used to determine the performance of the augmented reality device 1000.

As the augmented reality device 1000 is communicatively connected to the external electronic device 2000, the augmented reality device 1000 may be configured to receive, from the external electronic device 2000, performance information (e.g., NPU identification value, NPU specification information, memory type, and/or memory capacity) of the external electronic device 2000. As the augmented reality device 1000 is communicatively connected to the external electronic device 2000, the augmented reality device 1000 may be configured to receive, from the external electronic device 2000, an identification value (e.g., SSID) of the external electronic device 2000. In this case, the augmented reality device 1000 may be configured to acquire performance information of the external electronic device 2000 based on an identification value (e.g., SSID) of the external electronic device 2000. When the external electronic device 2000 does not include an NPU, the augmented reality device 1000 may be configured to acquire specification information of a CPU or GPU of the external electronic device 2000.

According to an embodiment, the operation for the augmented reality device 1000 to identify performance information of the augmented reality device 1000 and performance information of the external electronic device 2000 may be omitted.

According to an embodiment, the augmented reality device 1000 may be configured to identify the identification value of the first artificial intelligence model 10 or information about the amount of computation of the first artificial intelligence model 10 to be executed in the augmented reality device 1000. For example, the amount of computation of the first artificial intelligence model 10 may include the number of bits of parameters of the first artificial intelligence model 10. Parameters of the first artificial intelligence model 10 may be parameters of a neural network included in the first artificial intelligence model 10, and may include, for example, an activation parameter and a weight parameter, but not limited thereto.

In addition, the augmented reality device 1000 may be configured to identify the identification value of the second artificial intelligence model 20 to be executed in the external electronic device 2000 or information about the amount of computation of the second artificial intelligence model 20. For example, the amount of computation of the second artificial intelligence model 20 may include the number of bits of parameters of the second artificial intelligence model 20. The parameter of the second artificial intelligence model 20 may be a parameter of a neural network included in the second artificial intelligence model 20, and may include, for example, an activation parameter and a weight parameter, but not limited thereto.

According to an embodiment, the operation 330 of the augmented reality device 1000 may be omitted.

In operation 340, the augmented reality device 1000 may be configured to select a device and artificial intelligence model for object recognition.

The augmented reality device 1000 may be configured to select a device and an intelligence model for object recognition by considering at least one of the performance information of the augmented reality device 1000, the performance information of the external electronic device 2000, or the accuracy and real-time capability of a service to be provided to the user. For example, if the service to be provided to the user requires high accuracy, the external electronic device 2000 may be selected. In another example, if the service to be provided to the user requires real-time capability, the augmented reality device 1000 may be selected.

According to an embodiment, the augmented reality device 1000 may select an artificial intelligence model to recognizing the object based on the service providing condition, and may identify the external electronic device 2000 or the server 3000 including the selected artificial intelligence model.

In this case, information about the accuracy and real-time capability of the service to be provided to the user may be configured in advance. For example, the accuracy level and the real-time level of the service to be provided to the user may be configured according to the type of application and a function to be provided to the user by the application.

For example, with regard to a function of detecting the existence of an object in an application for providing object recognition, the accuracy level may be configured to be low and the real-time level may be configured to be high. For example, in a case of detecting whether a specific object exists in a captured image, the accuracy level may be configured to be low and the real-time level may be configured to be high. For example, when a gesture of a user's hand is detected from a captured image and the type of gesture is classified, the accuracy level may be configured to be low and the real-time level may be configured to be high.

In addition, for example, with regard to a function of providing an identification value and/or detailed information of an object in an application for providing object recognition, the accuracy level may be configured to be high and the real-time level may be configured to be low.

For example, with regard to a function of providing information about an object while driving a vehicle among functions of a navigation application, the accuracy level may be configured to be low and the real-time level may be configured to be high. For example, with regard to a function of providing information about an object while a vehicle is stopped among the functions of the navigation application, the accuracy level may be configured to be high and the real-time level may be configured to be high.

For example, with regard to a function of providing detailed information about an object among functions of an application for providing search information, the accuracy level may be configured to be high and the real-time level may be configured to be low.

For example, when a video playback application provides search information about an object in a video, the real-time level may be configured to be high. For example, with regard to a function of providing text translation information in a translation application, the accuracy level may be configured to be high.

According to an embodiment, the augmented reality device 1000 may be configured to select an artificial intelligence model for object recognition based on an accuracy level and a real-time level of a service to be provided to a user. For example, as shown in Table 1 below, the amount of computation of the artificial intelligence model according to the accuracy level and the real-time level may be configured in advance.

**<Table 1>**

| Accuracy level | | Real-time level | | Artificial intelligence model | |
|---|---|---|---|---|---|
| | 1 | | 1 | | A4W4 ... |
| | 1 | | 2 | | A4W1, A1W4 ... |
| | 1 | | 3 | | A1W1 ... |
| | 2 | | 1 | | A16W16 ... |
| | 2 | | 2 | | A16W8, A8W16 ... |
| | 2 | | 3 | | A8W8, A4W8, A8W4 ... |
| | 3 | | 1 | | A32W32 ... |
| | 3 | | 2 | | A16W32, A32W16 ... |
| | 3 | | 3 | | A16W16 ... |

For example, when the accuracy level is '1' and the real-time level is '3', an artificial intelligence model of A1W1 precision having a small amount of computation may be selected. For example, when the accuracy level is '3' and the real-time level is '1', an AI model of A32W32 precision having a large amount of computation may be selected. However, the artificial intelligence model corresponding to the accuracy level and the real-time level is not limited thereto.

For example, according to a communication state between the augmented reality device 1000, the external electronic device 2000, and the server 3000, an artificial intelligence model corresponding to an accuracy level and a real-time level may be configured differently from Table 1. In this case, the augmented reality device 1000 may be configured to select an artificial intelligence model for object recognition from among artificial intelligence models supported by a device available to the augmented reality device 1000 by considering a communication state.

According to an embodiment, for example, when a gesture of a user is detected and the type of the gesture is identified, an artificial intelligence model having a low amount of computation and using a large-size partial image as an input may be selected.

According to an embodiment, the accuracy level and real-time level of a service to be provided to the user may be changed according to whether or not the user's gaze is maintained on the object to be recognized. For example, the real-time level may be set high while the user's gaze is directed toward the object (or the object's surroundings), and the accuracy level may be set high while the user's gaze is not directed toward the object (or the object's surroundings).

According to an embodiment, the augmented reality device 1000 may be configured to select a device to perform object recognition by driving an artificial intelligence model. The augmented reality device 1000 may be configured to select a device to perform object recognition from among the augmented reality device 1000, the external electronic device 2000, and the server 3000. For example, as shown in Table 2, an artificial intelligence model supported by the augmented reality device 1000, the external electronic device 2000, and the server 3000 may be configured in advance.

**<Table 2>**

| | Artificial intelligence model | | Input size | |
|---|---|---|---|---|
| Augmented reality device | | A1W1 precision | | 500 x 500 |
| | | A4W1 precision | | 400 x 400 |
| | | A4W4 precision | | 300 x 300 |
| | | ... | | ... |
| External electronic device | | A8W8 precision | | 400 x 400 |
| | | A16W8 precision | | 300 x 300 |
| | | A8W16 precision | | 300 x 300 |
| | | ... | | ... |
| Server | | A32W32 precision | | 300 x 300 |
| | | ... | | ... |

For example, the augmented reality device 1000 may be configured to support first artificial intelligence models 10 of A1W1 precision, A4W1 precision, and A4W4 precision. For example, the external electronic device 2000 may support second artificial intelligence models 20 of A8W8 precision, A16W8 precision, and A8W16 precision. For example, the server 3000 may support the third artificial intelligence model 30 of A32W32 precision. However, examples of artificial intelligence models supported by the augmented reality device 1000, the external electronic device 2000, and the server 3000 are not limited thereto.

According to an embodiment, a device for recognizing an object and/or an artificial intelligence model to recognize the object may be changed for recognition or a captured image according to a service providing condition. For example, in a case of performing object recognition for captured images that are continuously acquired, a service providing condition may be changed in the middle of object recognition for the captured images. In this case, the augmented reality device 1000 may be configured to change a device and an AI model for object recognition by considering service providing conditions, performance information of the augmented reality device 1000, performance information of the external electronic device 2000, and the accuracy and real-time capability of the service to be provided to a user.

As a device for recognizing an object and/or an artificial intelligence model to recognize the object is changed, the augmented reality device 1000 may be configured to change the size of a partial image, to be described later.

In operation 350, the augmented reality device 1000 may be configured to acquire a partial image including an object from the captured image. The augmented reality device 1000 may be configured to acquire a partial image including an object corresponding to the user's gaze from the captured image. The augmented reality device 1000 may be configured to identify a location corresponding to the user's gaze in the captured image, and crop a partial image having a predetermined size around the identified location. In this case, the size of the partial image may be determined according to the size of the input image input to the selected artificial intelligence model. For example, the size of the input image of the artificial intelligence model may be preconfigured as shown in Table 2, and the augmented reality device 1000 may be configured to crop a partial image having the size of the input image of the selected artificial intelligence model from the captured image.

In Table 2, the input image of the artificial intelligence model is configured to have various sizes, but is not limited thereto. For example, the greater the amount of computation of the artificial intelligence model, the greater the configured size of the input image corresponding to the artificial intelligence model.

The augmented reality device 1000 may be configured to additionally adjust the size of the partial image. The augmented reality device 1000 may be configured to additionally adjust the size of the partial image so that the partial image may be input to the artificial intelligence model.

In operation 360, the augmented reality device 1000 may be configured to acquire a result of recognition of the object. The augmented reality device 1000 may be configured to acquire the object recognition result by using the acquired partial image and the selected artificial intelligence model.

When the first artificial intelligence model 10 of the augmented reality device 1000 is selected, the augmented reality device 1000 may be configured to input a partial image to the first artificial intelligence model 10 and acquire a result value output from the first artificial intelligence model 10.

When the second artificial intelligence model 20 of the external electronic device 2000 is selected, the augmented reality device 1000 may be configured to provide a partial image to the external electronic device 2000, and the external electronic device 2000 may input the partial image to the second artificial intelligence model 20 of the external electronic device 2000. The external electronic device 2000 may acquire a result value output from the second artificial intelligence model 20 and provide the acquired result value for object recognition to the augmented reality device 1000. The external electronic device 2000 may be configured to acquire additional search information by using the object recognition result value, and may provide the acquired search information to the augmented reality device 1000.

When the third artificial intelligence model 30 of the server 3000 is selected, the augmented reality device 1000 may be configured to provide a partial image to the server 3000 through the external electronic device 2000. The augmented reality device 1000 may be configured to transmit a request to the external electronic device 2000 so as to allow the server 3000 to recognize an object in the partial image, and the external electronic device 2000 may be configured to request object recognition of the partial image from the server in response to the request of the augmented reality device 1000. The server 3000 may be configured to receive the partial image from the external electronic device 2000 and input the partial image to the third artificial intelligence model so as to acquire an object recognition result. The server 3000 may be configured to provide the object recognition result to the external electronic device 2000, and the external electronic device 2000 may be configured to provide the object recognition result to the augmented reality device 1000. The external electronic device 2000 and/or the server 3000 may be configured to acquire additional search information by using the object recognition result value and provide the acquired search information to the augmented reality device 1000.

The augmented reality device 1000 may provide a service related to the object to the user. The augmented reality device 1000 may be configured to output an object recognition result and/or additional search information.

FIG. 4 is a flowchart illustrating a method for identifying a condition of providing a service related to object recognition by an augmented reality device according to an embodiment. Operations 400 to 430 of FIG. 4 may correspond to operation 320 of FIG. 3.

In operation 400, the augmented reality device 1000 may be configured to eceive a user input command. A user may input a voice input requesting a service related to an object into the augmented reality device 1000. For example, the user may input a voice input, such as "what is the name of that dog?", "please translate it", and "what is the name of that building?" to the augmented reality device 1000.

In operation 410, the augmented reality device 1000 may be configured to identify an application being executed and a function of the application. The augmented reality device 1000 may be configured to identify an application to provide a service according to a user's voice input and a function of the application. When an application to provide a service according to the user's voice input is not being executed, the augmented reality device 1000 may be configured to execute an application to provide a service according to the user's voice input. Alternatively, an application for providing a service according to the user's voice input may be executed in the augmented reality device 1000 and/or the external electronic device 2000.

For example, when the user's voice input is "what's the name of that dog?", the augmented reality device 1000 may be configured to identify a search function of an application for providing a search service. For example, when the user's voice input is "please translate it", the augmented reality device 1000 may be configured to identify a translation function of an application for providing a translation service. For example, when the user's voice input is "what's the name of that building?", the augmented reality device 1000 may be configured to identify a search function of a navigation application.

In operation 420, the augmented reality device 1000 may be configured to identify the location of the augmented reality device 1000. The augmented reality device 1000 may be configured to identify the location of the augmented reality device 1000 by using a GPS sensor within the augmented reality device 1000. Alternatively, the augmented reality device 1000 may be configured to receive a location value of the external electronic device 2000 from the external electronic device 2000 connected to the augmented reality device 1000 (for example, the external electronic device 2000 may be wirelessly connected to the augmented reality device 1000), and use the location value of the external electronic device 2000 as the location value of the augmented reality device 1000.

According to an embodiment, the operation 420 of the augmented reality device 1000 may be omitted.

In operation 430, the augmented reality device 1000 may be configured to identify service providing conditions for a service to be provided to a user. For example, the augmented reality device 1000 may be configured to determine an accuracy level and a real-time level of a service to be provided to a user based on at least one of an application type, a function of the application, and a location of the augmented reality device 1000. In this case, an accuracy level and a real-time level corresponding to at least one of the type of application, the function of the application, and the location of the augmented reality device 1000 may be configured in advance (for example, the type of application, the function of the application, and the location of the augmented reality device 1000 may each correspond to a predetermined accuracy level and real-time level). The augmented reality device 1000 may be configured to identify, as a condition of providing a service to be provided to the user, an accuracy level and a real-time level corresponding to at least one of the type of application, the function of the application, and the location of the augmented reality device 1000.

For example, in case that an application for providing tourism destination information is executed to provide a service, when the augmented reality device 1000 is located around a preconfigured landmark, the augmented reality device 1000 may be configured to identify the accuracy level of the service to be provided to the user as high, and identify the real-time level thereof as low. For example, in case that an application for providing tourism destination information is executed to provide a service, when the augmented reality device 1000 is not located around a preconfigured landmark, the augmented reality device 1000 may be configured to identify the accuracy level of the service to be provided to the user as low, and identify the real-time level thereof as high.

For example, in case that a navigation application is executed to provide a service, when the augmented reality device 1000 is located in an accident-prone area, the augmented reality device 1000 may be configured to identify the accuracy level of the service to be provided to the user as high, and identify the real-time level thereof as low. For example, in case that a navigation application is executed to provide a service, when the augmented reality device 1000 is not located in an accident-prone area, the augmented reality device 1000 may be configured to identify the accuracy level of the service to be provided to the user as low, and identify the real-time level thereof as high.

For example, the higher the real-time level of the service, the stricter the configured conditions related to the communication state of the service (for example, it may be more important for the service to be provided quickly to the user and, thus, the configured conditions may be stricter). In addition, for example, as the real-time level of the service is lowered, conditions related to the communication state of the service may be configured to be alleviated (for example, it may be less important for the service to be provided quickly to the user and, thus, the configured conditions may be less strict). In addition, when the communication state of the augmented reality device 1000 and/or the external electronic device 2000 satisfies the communication state of a service providing condition, the service providing condition may be configured such that the augmented reality device 1000 selects the second artificial intelligence model 20 of the external electronic device 2000 or selects the third artificial intelligence model 30 of the server 3000.

FIG. 5 illustrates an example in which a size of a partial image, a device for object recognition, and an artificial intelligence model for object recognition are determined by considering a condition of providing a service to be provided to a user according to an embodiment.

Referring to FIG. 5, by considering information 50 on processor specifications of an external electronic device 2000, information 51 on processor specifications of an augmented reality device 1000, a service providing condition 52, a communication state 53 of the augmented reality device 1000 and/or the external electronic device 2000, and a user's gaze information 54, the augmented reality device 1000 may be configured to determine a crop area of a partial image from a captured image, select a device for object recognition, and select an artificial intelligence model for object recognition. The service providing condition 52 may include a target latency, a computation demand, and a target accuracy. For example, the target latency may be a value quantified according to the real-time level, and the target accuracy may be a value quantified according to the accuracy level.

For example, the augmented reality device 1000 may be configured to crop a partial image 56-1 having a resolution of 300 x 300 pixels from a captured image, and configure an operation mode for object recognition so that a processor of the augmented reality device 1000 inputs the cropped partial image 56-1 to an artificial intelligence model of A4W1 precision to perform calculation.

For example, the augmented reality device 1000 may be configured to crop a partial image 56-2 having a resolution of 500 x 500 pixels from a captured image, and configure an operation mode for object recognition so that a processor of the augmented reality device 1000 inputs the cropped partial image 56-2 to an artificial intelligence model of A1W1 precision to perform calculation.

For example, the augmented reality device 1000 may be configured to crop a partial image 56-3 having a resolution of 400 x 400 pixels from a captured image, and configure an operation mode for object recognition so that a processor of the external electronic device 2000 inputs the cropped partial image 56-3 to an artificial intelligence model of A8W8 precision to perform calculation.

For example, the augmented reality device 1000 may be configured to crop a partial image 56-4 having a resolution of 300 x 300 pixels from a captured image, and configure an operation mode for object recognition so that a processor of the external electronic device 2000 inputs the cropped partial image 56-4 to an artificial intelligence model of A16W8 precision to perform calculation.

For example, the augmented reality device 1000 may be configured to crop a partial image 56-5 having a resolution of 400 x 400 pixels from a captured image, and configure an operation mode for object recognition so that a processor of the server 3000 inputs the cropped partial image 56-5 to an artificial intelligence model of FP32 precision to perform calculation.

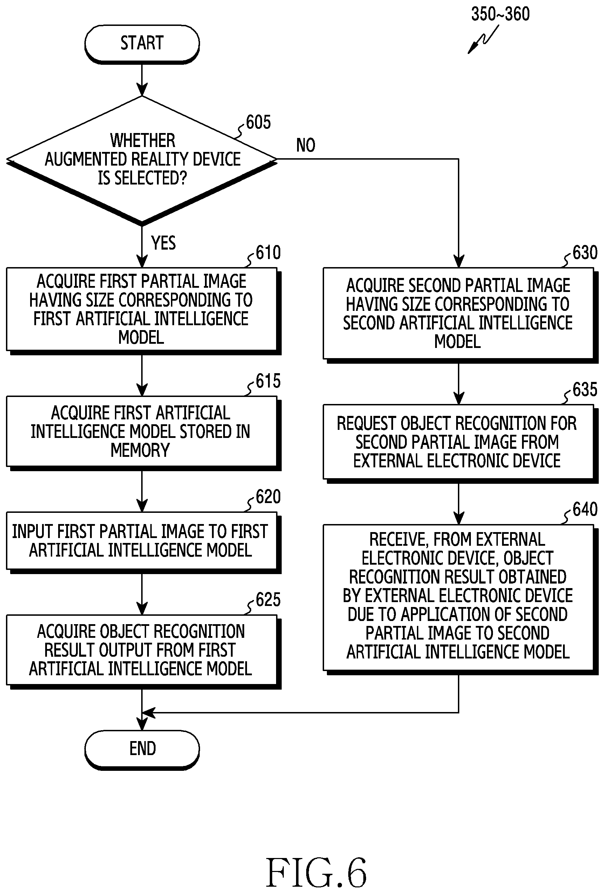

FIG. 6 is a flowchart illustrating a method for recognizing an object in a partial image by using at least one of an augmented reality device or an external electronic device according to an embodiment. Operations of FIG. 6 may correspond to operations 350 and 360 of FIG. 3.

In operation 605, the augmented reality device 1000 may be configured to determine whether the augmented reality device 1000 is selected. The augmented reality device 1000 may be configured to determine whether the augmented reality device 1000 is selected as a device to execute the artificial intelligence model from among the augmented reality device 1000 and the external electronic device 2000.

When it is determined that the augmented reality device 1000 is selected ('Yes') in operation 605, the augmented reality device 1000 may be configured to acquire a first partial image having a size corresponding to the first artificial intelligence model 10 in operation 610. The augmented reality device 1000 may be configured to identify the resolution of an input image of the first artificial intelligence model 10 and crop a first partial image having the identified resolution from the captured image. For example, the augmented reality device 1000 may be configured to crop a first partial image including a predetermined area from the captured image based on the user's gaze. For example, based on the user's gaze, a first partial image having the identified resolution may be cropped from the captured image, wherein the first partial image includes the object to be recognized.

In operation 615, the augmented reality device 1000 may be configured to acquire the first artificial intelligence model 10 stored in the memory of the augmented reality device 1000, and in operation 620, the augmented reality device 1000 may be configured to input the first partial image to the first artificial intelligence model 10. The processor of the augmented reality device 1000 may be configured to extract the first artificial intelligence model 10 from the memory of the augmented reality device 1000 and input the first partial image to the first artificial intelligence model 10. For example, the NPU of the augmented reality device 1000 may be configured to extract the first artificial intelligence model 10 from the memory of the augmented reality device 1000 and input the first partial image to the first artificial intelligence model 10. Alternatively, for example, the CPU or GPU in the augmented reality device 1000 may be configured to extract the first artificial intelligence model 10 from the memory of the augmented reality device 1000 and input the first partial image to the first artificial intelligence model 10.

In operation 625, the augmented reality device 1000 may be configured to acquire an object recognition result output from the first artificial intelligence model 10. The augmented reality device 1000 may be configured to display a graphical user interface (GUI) indicating an object recognition result or output a sound indicating an object recognition result. Since the first artificial intelligence model 10 is a model that recognizes an object by using a small amount of computation, when a service needs to be quickly provided to a user, the augmented reality device 1000 may be configured to quickly recognize an object in a captured image and provide information on the object recognition to the user.

When it is determined in operation 605 that the augmented reality device 1000 is not selected (No), the augmented reality device 1000 may acquire a second partial image having a size corresponding to a second artificial intelligence model 20 in operation 630. The augmented reality device 1000 may be configured to identify the resolution of the input image of the second artificial intelligence model 20 and crop a second partial image having the identified resolution from the captured image. For example, the augmented reality device 1000 may be configured to crop a second partial image including a predetermined area based on the user's gaze from the captured image.

In operation 635, the augmented reality device 1000 may be configured to request object recognition for the second partial image from the external electronic device 2000. The augmented reality device 1000 may be configured to request object recognition while transmitting the second partial image to the external electronic device 2000. In this case, the augmented reality device 1000 may be configured to identify a communication state between the augmented reality device 1000 and the external electronic device 2000. When it is determined that the communication state between the augmented reality device 1000 and the external electronic device 2000 is good (for example, when a connection between the augmented reality device 1000 and the external electronic device 2000 is established and stable), the augmented reality device 1000 may be configured to request object recognition from the external electronic device 2000. When the communication connection between the augmented reality device 1000 and the external electronic device 2000 is disconnected or unstable, the augmented reality device 1000 may be configured to perform operation 610 instead of requesting object recognition from the external electronic device 2000.

In operation 640, the augmented reality device 1000 may be configured to receive, from the external electronic device 2000, an object recognition result obtained by the external electronic device 2000 due to the application of the second partial image to the second artificial intelligence model 20. The external electronic device 2000, having received the second partial image from the augmented reality device 1000, may be configured to input the second partial image to the second artificial intelligence model 20 and acquire the object recognition result output from the second artificial intelligence model 20. For example, the processor of the external electronic device 2000 may be configured to extract the second artificial intelligence model 20 from the memory of the external electronic device 2000 and input the second partial image to the second artificial intelligence model 20. For example, the NPU of the external electronic device 2000 may be configured to extract the second artificial intelligence model 20 from the memory of the external electronic device 2000 and input the second partial image to the second artificial intelligence model 20. Alternatively, for example, the CPU or GPU in the external electronic device 2000 may be configured to extract the second artificial intelligence model 20 from the memory of the external electronic device 2000 and input the second partial image to the second artificial intelligence model 20. In addition, the external electronic device 2000 may be configured to transmit an object recognition result for the second partial image to the augmented reality device 1000.

The augmented reality device 1000 may be configured to display a graphical user interface (GUI) indicating an object recognition result received from the external electronic device 2000 or output a sound indicating the object recognition result. Since the second artificial intelligence model 20 is a model that recognizes objects more accurately than the first artificial intelligence model 10, the augmented reality device 1000 may be configured to accurately recognize an object in a captured image and provide information on the object recognition to a user when a service needs to be accurately provided to a user.

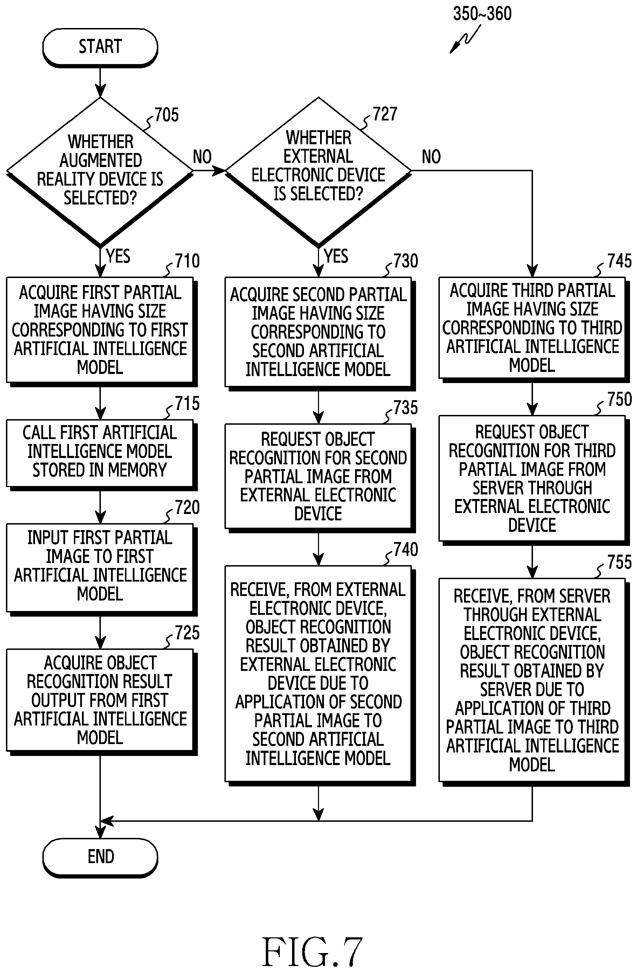

FIG. 7 is a flowchart illustrating a method for recognizing an object in a partial image by using at least one of an augmented reality device, an external electronic device, and a server according to an embodiment. Operations of FIG. 7 may correspond to operations 350 and 360 of FIG. 3.

In addition, operations 705 to 725 of FIG. 7 correspond to operations 605 to 625 of FIG. 6, and operations 730 to 740 of FIG. 7 may correspond to operations 630 to 640 of FIG. 6. As such, descriptions of operations 705 to 725 and operations 730 to 740 will be omitted.

As a result of the determination in operation 705, when it is determined that the augmented reality device 1000 has not selected the augmented reality device 1000 ('No'), the augmented reality device 1000 may be configured to determine whether the external electronic device 2000 has been selected in operation 727. The augmented reality device 1000 may be configured to determine whether the external electronic device 2000 is selected as a device to execute the artificial intelligence model from among the augmented reality device 1000, the external electronic device 2000, and the server 3000.

As a result of the determination in operation 727, when it is determined that the augmented reality device 1000 has selected the external electronic device 2000 ('Yes'), the augmented reality device 1000 may be configured to perform operation 730.

As a result of the determination in operation 727, when it is determined that the augmented reality device 1000 has not selected the external electronic device 2000 ('No'), the augmented reality device 1000 may be configured to acquire a third partial image having a size corresponding to a third artificial intelligence model 30 in operation 745. The augmented reality device 1000 may be configured to identify the resolution of an input image of the third artificial intelligence model 30 and crop a third partial image having the identified resolution from the captured image. For example, the augmented reality device 1000 may be configured to crop a third partial image including a predetermined area based on the user's gaze from the captured image.

In operation 750, the augmented reality device 1000 may be configured to request object recognition for the third partial image from the server 3000. The augmented reality device 1000 may be configured to request object recognition for the third partial image from the server 3000 through the external electronic device 2000. For example, the augmented reality device 1000 may be configured to transmit a request to the external electronic device 2000 so as to allow the server 3000 to request object recognition while transmitting the third partial image to the external electronic device 2000. Alternatively, the augmented reality device 1000 may be configured to directly request object recognition from the server 3000. For example, the augmented reality device 1000 may be configured to request object recognition from the server 3000 while transmitting the third partial image to the server 3000.

In this case, the augmented reality device 1000 may be configured to identify at least one of a communication state between the augmented reality device 1000 and the external electronic device 2000, a communication state between the external electronic device 2000 and the server 3000, or a communication state between the augmented reality device 1000 and the server 3000.

When it is determined that the communication state between the augmented reality device 1000 and the external electronic device 2000 and the communication state between the external electronic device 2000 and the server 3000 are good (for example, when a connection between the augmented reality device 1000 and the external electronic device 2000 is established and stable and a connection between the external electronic device 2000 and the server 3000 is established and stable), the augmented reality device 1000 may be configured to request object recognition from the server 3000 through the external electronic device 2000.

When the communication connection between the augmented reality device 1000 and the external electronic device 2000 is disconnected or unstable and the communication state between the augmented reality device 1000 and the server 3000 is good (for example, when a connection between the augmented reality device 1000 and the server 3000 is established and stable), the augmented reality device 1000 may be configured to directly request object recognition from the server 3000.

When the communication state between the augmented reality device 1000 and the external electronic device 2000 is good for example, when a connection between the augmented reality device 1000 and the external electronic device 2000 is established and stable, and the communication connection between the external electronic device 2000 and the server 3000 is disconnected or the communication state therebetween is unstable, the augmented reality device 1000 may be configured to perform operation 730 instead of requesting object recognition from the server 3000.

When the communication connection between the augmented reality device 1000 and the external electronic device 2000 is disconnected or the communication state therebetween is unstable, and the communication connection between the augmented reality device 1000 and the server 3000 is disconnected or the communication state therebetween is unstable, the augmented reality device 1000 may be configured to perform operation 610 instead of requesting object recognition from the server 3000.

In operation 755, the augmented reality device 1000 may be configured to receive, from the server 3000, an object recognition result obtained by the server 3000 due to the application of the third partial image to the third artificial intelligence model 30. The server 3000 may be configured to input the third partial image to the third artificial intelligence model 30 and acquire the object recognition result output from the third artificial intelligence model 30. For example, the processor of the server 3000 may be configured to extract the third artificial intelligence model 30 stored in the server 3000 and input the third partial image to the third artificial intelligence model 30. In addition, the server 3000 may be configured to transmit an object recognition result for the third partial image to the augmented reality device 1000 directly or transmit the same to the augmented reality device 1000 through the external electronic device 2000.

The augmented reality device 1000 may be configured to display a graphical user interface (GUI) indicating an object recognition result received from the server 3000 or output a sound indicating the object recognition result.

Since the first artificial intelligence model 10, the second artificial intelligence model 20, and the third artificial intelligence model 30 are different in accuracy and real-time capability, the augmented reality device 1000 may be configured to effectively select and use at least one of the first artificial intelligence model 10, the second artificial intelligence model 20, and the third artificial intelligence model 30. Therefore, according to the attributes of a service to be provided to a user, the augmented reality device 1000 may be configured to effectively provide object recognition results in the captured image to the user.

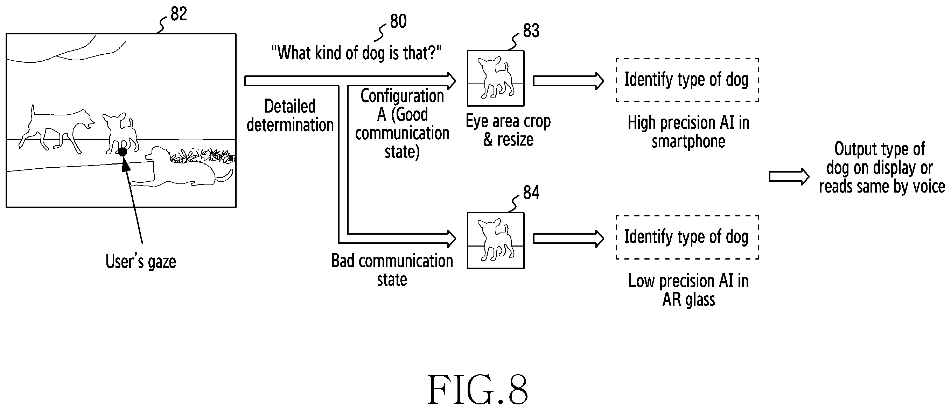

FIG. 8 illustrates an example in which an augmented reality device recognizes an object by using an augmented reality device or an external electronic device according to a service providing condition according to an embodiment.

Referring to FIG. 8, in a situation in which a user's gaze is directed toward a dog located in the middle among three dogs of the real world, the user may input a voice input 80 saying, "What kind of dog is that?" to the augmented reality device 1000 (e.g., AR glasses).

The augmented reality device 1000 may be configured to identify that the user needs to determine the type of dog in detail from the user's voice input 80 and determine that the accuracy of the object recognition service to be provided to the user is important (for example, an accuracy level is determined to be high). For example, since the accuracy of the object recognition service to be provided to the user is important, the external electronic device 2000 may be selected as the device to execute the artificial intelligence model from among the augmented reality device 1000 and the external electronic device 2000. Then, the augmented reality device 1000 may be configured to identify a communication state between the augmented reality device 1000 (e.g. a glasses-type device) and the external electronic device 2000 (e.g., a smartphone).

When the communication state between the augmented reality device 1000 and the external electronic device 2000 is good (for example, when a connection between the augmented reality device 1000 and the external electronic device 2000 is established and stable), the augmented reality device 1000 may be configured to crop and resize a second partial image 83 from a captured image 82 so that the second partial image is input to the second artificial intelligence model 20 of the external electronic device 2000. In this case, the augmented reality apparatus 1000 may display a GUI for indicating a position of the second partial image 83 so that the user can check whether the second partial image 83 to be cropped includes an object (ex: dog) corresponding to the voice input 80. In addition, the augmented reality device 1000 may be configured to request object recognition from the external electronic device 2000, and the external electronic device 2000 may be configured to input the second partial image 83 to the second artificial intelligence model 20 so as to identify the type of dog. For example, the smartphone may receive an object recognition request including the second partial image 83 from the augmented reality device 1000, and may identify the type of dog by using a high-precision artificial intelligence model in the smartphone. Thereafter, the augmented reality device 1000 may be configured to receive information indicating the type of dog from the external electronic device 2000 and output the received information on the type of dog to a display of the augmented reality device 1000 or output the same as audio or a voice. For example, the augmented reality apparatus 1000 outputs the identified dog type to the display of the augmented reality apparatus 1000, or outputs the same as audio of a voice.

When the communication state between the augmented reality device 1000 and the external electronic device 2000 is bad (for example, when the connection has failed/disconnected or the connection is unstable), the augmented reality device 1000 may be configured to crop and resize a first partial image 84 from a captured image 82 so that the first partial image is input to the first artificial intelligence model 10 of the augmented reality device 1000. In addition, the augmented reality device 1000 may be configured to identify the type of dog by inputting the first partial image 84 to the first artificial intelligence model 10. For example, the AR glasses may identify the type of dog in the first partial image 84 by using a low-precision artificial intelligence model within the AR glasses. Thereafter, the augmented reality device 1000 may be configured to output the identified dog type to a display of the augmented reality device 1000 or to output the same as audio or a voice. For example, while the user's gaze is maintained on the object corresponding to the voice input 80,the augmented reality apparatus 1000 outputs the identified dog type to the display of the augmented reality apparatus 1000, or outputs the same as audio of a voice.

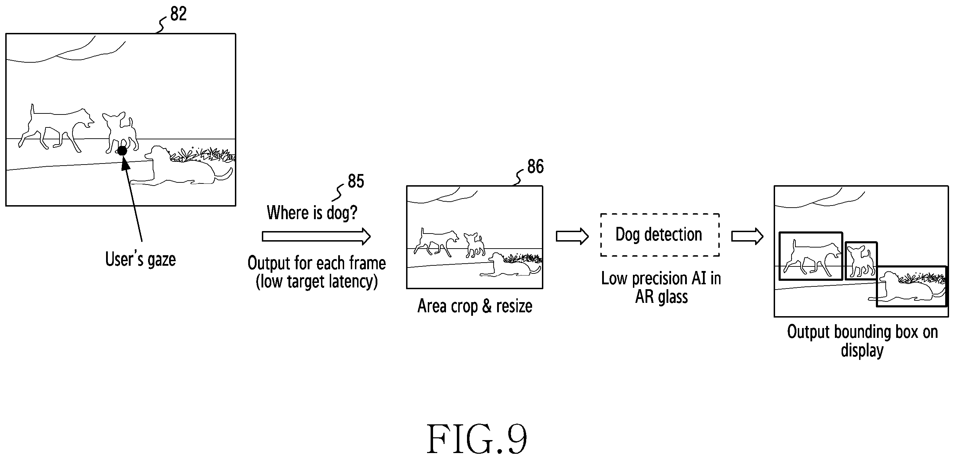

FIG. 9 illustrates an example in which an augmented reality device may recognize an object by using an augmented reality device or a server according to a service providing condition according to an embodiment.

Referring to FIG. 9, in a situation where a user's gaze is directed toward a dog located in the middle among three dogs of the real world, the user may input a voice input 85 of "Where is the dog?" to the augmented reality device 1000 (e.g., AR glasses).

The augmented reality device 1000 may be configured to identify, from the user's voice input 85, that information indicating the location of the dog should be provided for each frame of a captured image in order to notify the user of the location of the dog. Since the augmented reality device 1000 only needs to detect the dog and identify the dog's location rather than accurately recognizing the type of dog, it may determine that real-time capability of an object recognition service to be provided to a user is more important than the accuracy of the object recognition service (for example, a real-time level may be determined to be higher than an accuracy level). Thereafter, the augmented reality device 1000 may be configured to crop and resize the first partial image 86 from the captured image 82 so that the first partial image is input to the first artificial intelligence model 10 of the augmented reality device 1000. In this case, the captured image 82 may correspond to each frame of a captured video, and the first partial image 86 may be an image cropped and resized from each frame of the captured video. In addition, the augmented reality device 1000 may be configured to detect a dog and identify a location of the dog in the first partial image 86 by inputting the first partial image 86 to the first artificial intelligence model 10. For example, the AR glasses may detect a dog in the first partial image 86 and identify a location of the dog by using a low-precision artificial intelligence model within the AR glasses. Thereafter, the augmented reality device 1000 may be configured to output an indicator (e.g., bounding box) indicating the identified location of the dog on a display of the augmented reality device 1000. For example, while the user's gaze is maintained on the object corresponding to the voice input 85, the augmented reality apparatus 1000 outputs the indicator indicating the identified location of the dog on a display of the augmented reality device 1000.

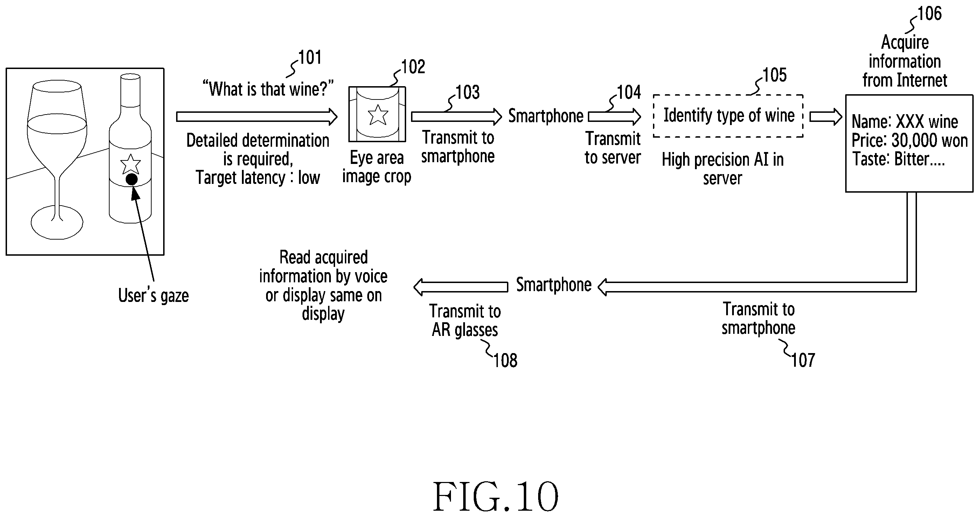

FIG. 10 illustrates an example of recognizing an object by an augmented reality device interworking with an external electronic device and a server according to an embodiment.

Referring to FIG. 10, in a situation where a user's gaze is directed toward a bottle of wine in the real world, the user may input a voice input 101 saying, "What is that wine?" to the augmented reality device 1000 (e.g., a glasses-type device).

The augmented reality device 1000 may be configured to identify from the user's voice input 101 that it is necessary to notify the user of detailed information related to wine and identify that the accuracy of an object recognition service to be provided to the user is important. For example, the augmented reality device 1000 may be configured to identify that the accuracy of the object recognition service is high and a target latency is low.

The augmented reality device 1000 may be configured to crop and resize the third partial image 102 from the captured image so that the third partial image is input to the third artificial intelligence model 30 of the server 3000 (for example, the third partial image may correspond to a label of the wine bottle). In this case, the augmented reality apparatus 1000 may display a GUI for indicating a position of the third partial image 102 so that the user can check whether the third partial image 102 to be cropped includes an object (ex: the wine bottle) corresponding to the voice input 101. In addition, the augmented reality device 1000 may be configured to transmit the third partial image 102 to the external electronic device 2000 (e.g., a smartphone) (indicated by reference numeral 103) so that the server 3000 performs object recognition. The augmented reality device 1000 may be configured to request object recognition and additional information about the object while transmitting the third partial image 102 to the external electronic device 2000.

Thereafter, the external electronic device 2000 may transmit the received third partial image 102 to the server 3000 (indicated by reference numeral 104). The external electronic device 2000 may request object recognition and additional information about the object while transmitting the third partial image 102 to the server.

The server 3000 may be configured to input the third partial image 102 to the third artificial intelligence model 30 so as to identify the type of wine (indicated by reference numeral 105). For example, the server 3000 may be configured to receive an object recognition request including the third partial image 102 from a smartphone, and identify the type of wine within the third partial image 102 by using a high-precision artificial intelligence model in the server 3000. In addition, the server 3000 may be configured to acquire additional information about the identified wine (indicated by reference numeral 106). For example, the server 3000 may be configured to perform an Internet search based on the identified type of wine, and acquire additional information related to the name, price, taste, and the like, of the wine as an Internet search result.

Thereafter, the server 3000 may be configured to transmit the type of wine and additional information to the external electronic device 2000 (e.g., a smartphone) (indicated by reference numeral 107), and the external electronic device 2000 may be configured to transmit the type of wine and the additional information to the augmented reality device 1000 (e.g., AR glasses) (indicated by reference numeral 108).

Thereafter, the augmented reality device 1000 may be configured to output the received information about wine to a display of the augmented reality device 1000 or to output the same as audio or a voice. For example, while the user's gaze is maintained on the object corresponding to the voice input 101, the augmented reality apparatus 1000 outputs the received information about wine to the display of the augmented reality apparatus 1000, or outputs the same as audio of a voice.

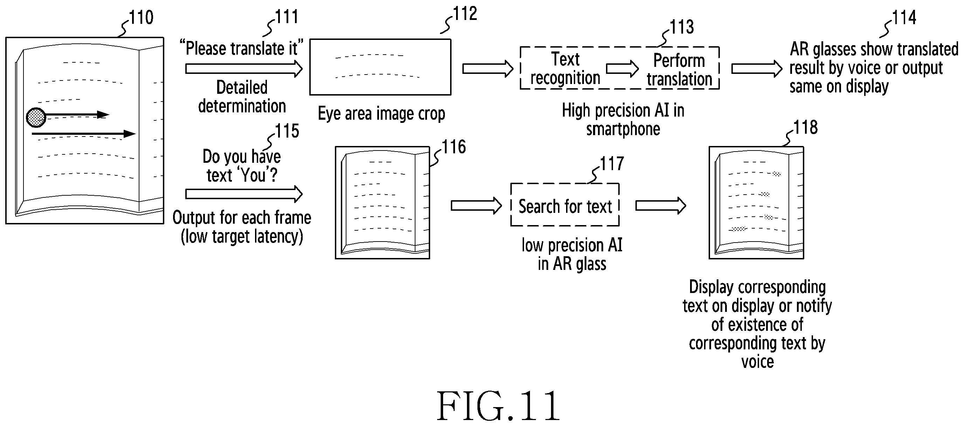

FIG. 11 illustrates an example of recognizing text in an image by an augmented reality device according to an embodiment.

Referring to FIG. 11, in a situation where a user's gaze is directed toward a specific page of a book in the real world, the user may input a voice input 111 saying "translate it" to the augmented reality device 1000 (e.g., a glasses-type device).

The augmented reality device 1000 may be configured to identify from the user's voice input 111 that it is necessary to accurately translate the text of a part of the book toward which the user's gaze is directed, and identify that the accuracy of a translation service to be provided to the user is important.

The augmented reality device 1000 may be configured to crop and resize a second partial image 112 from the captured image 110 so that the second partial image is input to the second artificial intelligence model 20 of the external electronic device 2000 (e.g., a smartphone). The augmented reality device 1000 may be configured to track the user's gaze for a predetermined period of time after the user's voice input 111 is received, and crop the second partial image 112 from a captured image 110 based on the gaze tracked for the predetermined period of time.

In addition, the augmented reality device 1000 may be configured to request translation from the external electronic device 2000 while providing the second partial image 112 to the external electronic device 2000. The external electronic device 2000 may input the second partial image 112 to the second artificial intelligence model 20 so as to perform text recognition and translation (indicated by reference numeral 113). In this case, the second artificial intelligence model 20 may be an artificial intelligence model trained to recognize and translate text. For example, a smartphone may receive a translation request including the second partial image 112 from the augmented reality device 1000, and may recognize text in the second partial image 112 and translate the recognized text by using a high-precision artificial intelligence model in the smartphone. In the above, it has been described that one second artificial intelligence model 20 performs text recognition and translation, but is not limited thereto. The external electronic device 2000 may use multiple artificial intelligence models for text recognition and translation. For example, the external electronic device 2000 may be configured to recognize and translate text in the second partial image 112 by using an artificial intelligence model trained for text recognition and an artificial intelligence model trained for translation.

Thereafter, the augmented reality device 1000 may be configured to receive a translation result from the external electronic device 2000 and output the received translation result on a display of the augmented reality device 1000 or as audio or a voice.

On the other hand, according to an embodiment, in a situation where the user's gaze is directed toward a specific page of a book, the user may input a voice input 115 saying, "Do you have the text 'You'?" to the augmented reality device 1000 (e.g., AR glasses).

The augmented reality device 1000 may be configured to identify, from the user's voice input 115, that information indicating the location of the text 'You' (for example, each instance of the word 'You') should be provided for each frame of a captured image in order to find 'You' in the text on the current page and provide a notification to the user. Since the augmented reality device 1000 should quickly recognize the text 'You', the target latency of the object recognition service to be provided to the user may be determined to be low.

Thereafter, the augmented reality device 1000 may be configured to crop and resize a first partial image 116 from the captured image 110 so that the first partial image is input to the first artificial intelligence model 10 of the augmented reality device 1000. In this case, the captured image 110 may correspond to each frame of a captured video, and the first partial image 116 may correspond to an image cropped and resized from each frame of the captured video. In addition, the augmented reality device 1000 may be configured to search for the text 'You' on the current page by using the first partial image 116 (indicated by reference numeral 117). The augmented reality device 1000 may be configured to detect the text 'You' on the current page by inputting the first partial image 116 to the first artificial intelligence model 10, and identify the location of text 'You' in the first partial image 116. For example, the AR glasses may detect the text 'You' in the first partial image 86 and identify the location of the text 'You' by using a low-precision artificial intelligence model in the AR glasses. Thereafter, the augmented reality device 1000 may be configured to output an indicator indicating the location of the identified text 'You' to a display of the augmented reality device 1000 (indicated by reference numeral 118).

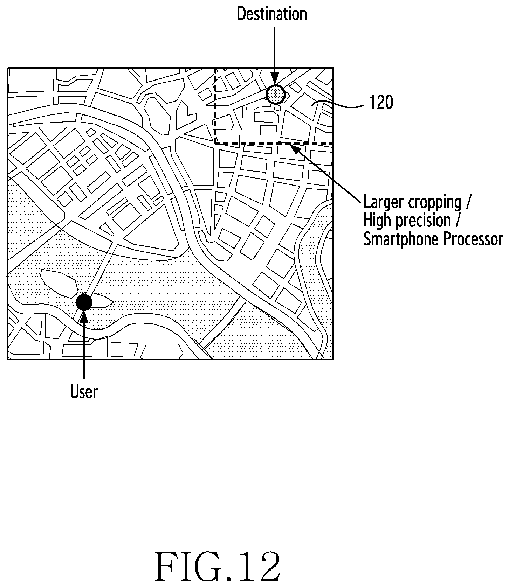

FIG. 12 illustrates an example in which an augmented reality device selects an artificial intelligence model and a device for object recognition based on a location of the augmented reality device according to an embodiment.

Referring to FIG. 12, in a state in which a navigation application of the augmented reality device 1000 is executed, the augmented reality device 1000 may be configured to move toward a destination. When the augmented reality device 1000 is positioned within the predetermined area 120 near the destination, the augmented reality device 1000 may be configured to determine that high accuracy for object recognition is required. The augmented reality device 1000 may be configured to crop a large-size partial image from a captured image and provide the cropped partial image to the external electronic device 2000 in order to recognize an object in the captured image (for example, the destination location within a street map). The augmented reality device 1000 may be configured to transmit a request to the external electronic device 2000 so as to allow the processor (e.g., NPU) of the external electronic device 2000 (e.g., a smartphone) to recognize an object by using the second artificial intelligence model 20 with high accuracy.

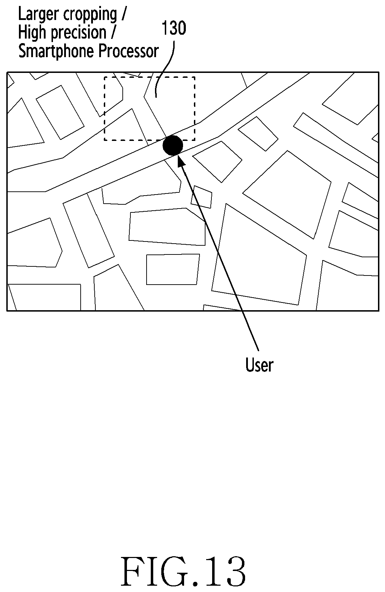

FIG. 13 illustrates an example in which an augmented reality device selects an artificial intelligence model and a device for object recognition based on a location of the augmented reality device according to an embodiment.

Referring to FIG. 13, the augmented reality device 1000 may be configured to move in a state in which a map application of the augmented reality device 1000 is executed (for example, as the user walks around). When the augmented reality device 1000 is located in an area 130 where traffic accidents frequently occur, the augmented reality device 1000 may be configured to determine that high accuracy for object recognition is required. The augmented reality device 1000 may be configured to crop a large-sized partial image from a captured image and provide the cropped partial image to the external electronic device 2000 in order to recognize an object in the captured image (for example, a portion of a street map in the vicinity of a current location of the user). The augmented reality device 1000 may be configured to transmit a request to the external electronic device 2000 so as to allow the processor (e.g., NPU) of the external electronic device 2000 (e.g., a smartphone) to recognize an object by using the second artificial intelligence model 20 with high accuracy.

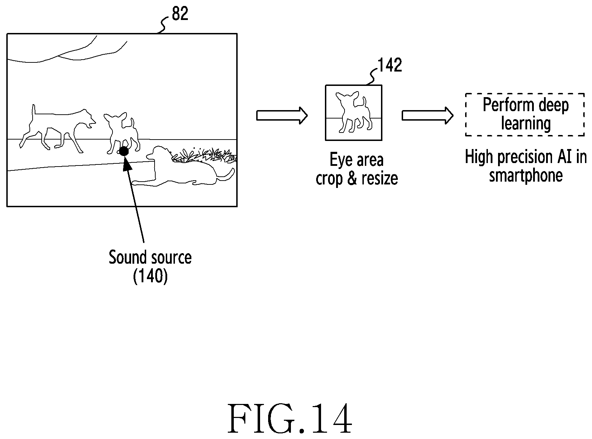

FIG. 14 illustrates an example in which an augmented reality device acquires a partial image based on a sound obtained by the augmented reality device according to an embodiment.

Referring to FIG. 14, the augmented reality device 1000 may be configured to crop a partial image from a captured image based on ambient sounds of the augmented reality device 1000 instead of a user's gaze. The augmented reality device 1000 may be configured to receive a sound signal from a location around the augmented reality device 1000 by using at least one microphone included in the augmented reality device 1000 (for example, the sound of a dog barking), and identify the location of a source 140, in which the sound is generated, from the received sound signal. The augmented reality device 1000 may be configured to identify a location corresponding to the sound source 140 in the captured image.

In this case, instead of operation 310 of identifying the user's gaze in FIG. 3, an operation of identifying a source of sound around the augmented reality device 1000 may be performed. Accordingly, the augmented reality device 1000 may be configured to crop and resize a partial image 142 from a captured image based on the sound source 140. In addition, the augmented reality device 1000 may be configured to perform object recognition based on the cropped partial image 142.

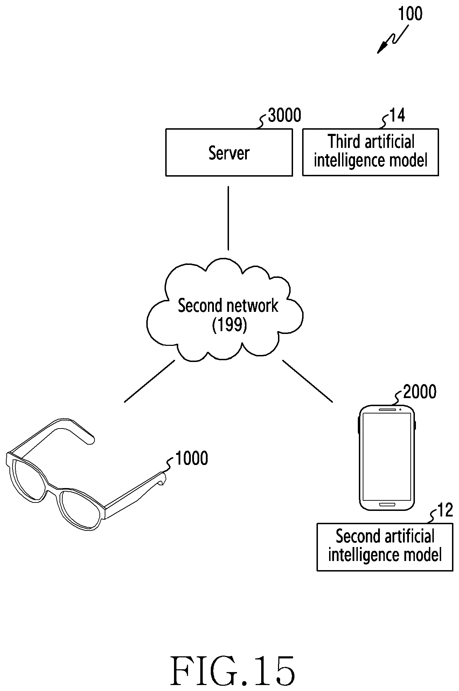

FIG. 15 is a schematic diagram of a system for enabling an augmented reality device to recognize an object in an image when the augmented reality device does not support processing of an artificial intelligence model according to an embodiment.

Referring to FIG. 15, an augmented reality device 1000 in a system 100 for recognizing an object in an image may be configured not to support processing of an artificial intelligence model. For example, when the augmented reality device 1000 does not include a separate NPU configured to execute the artificial intelligence model, or when the performance of a processor in the augmented reality device 1000 is low, the augmented reality device 1000 may be configured not to support processing of the artificial intelligence model. For example, when resources for object recognition of the augmented reality device 1000 are insufficient, the augmented reality device 1000 may be configured not to support processing of the artificial intelligence model.

The augmented reality device 1000 may be configured to capture an image of an object around the augmented reality device 1000 and interwork with at least one of the external electronic device 2000 or the server 3000, so as to acquire a result of recognition of the object in the captured image. The augmented reality device 1000 may be configured to recognize the object in the captured image by using at least one of the external electronic device 2000 or the server 3000 according to a service providing condition of a service provided to a user based on the object recognition in the captured image.

The augmented reality device 1000 does not include the first artificial intelligence model 10, the external electronic device 2000 may include at least one second artificial intelligence model 20 trained for object recognition, and the server 3000 may include at least one third artificial intelligence model 30 trained for object recognition. Object recognition may include, for example, at least one of identifying the type of object, detecting the object, or identifying the location of the object (as described by reference to FIGs 8 to 14).

The second artificial intelligence model 20 and the third artificial intelligence model 30 may recognize an object in a captured image by using different computational amounts, respectively. The second artificial intelligence model 20 may recognize an object in the captured image by using a second amount of computation, and the third artificial intelligence model 30 may recognize an object in the captured image by using a third amount of computation.

The second amount of computation of the second artificial intelligence model 20 may be smaller than the third amount of computation of the third artificial intelligence model 30. The second number of bits of the parameter of the second artificial intelligence model 20 may be smaller than the third number of bits of the parameter of the third artificial intelligence model 30. Parameters of the artificial intelligence model may be parameters of a neural network included in the artificial intelligence model, and may include, for example, an activation parameter and a weight parameter, but are not limited thereto.

When real-time capability of a service to be provided to a user is more important than the accuracy of the service, the augmented reality device 1000 may be configured to recognize an object in a captured image by using the second artificial intelligence model 20 of the external electronic device 2000. In addition, the augmented reality device 1000 may be configured to recognize an object in a captured image by using the third artificial intelligence model 30 of the server 3000 when the accuracy of a service to be provided to the user is more important than real-time capability of the service.

When an artificial intelligence model to be used for object recognition is determined among the second artificial intelligence model 20 and the third artificial intelligence model 30, the augmented reality device 1000 may be configured to crop a partial image including an object from a captured image and input the partial image to the determined artificial intelligence model, so as to acquire a result of object recognition based on the determined artificial intelligence model.

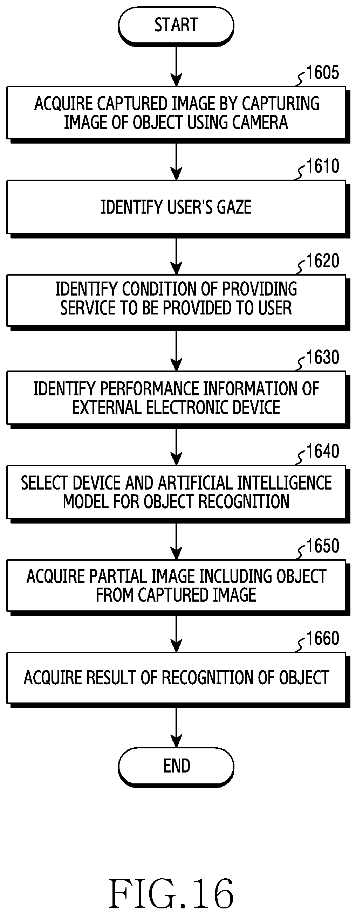

FIG. 16 is a flowchart illustrating a method in which an augmented reality device acquires a result of object recognition for a partial image including an object corresponding to a user's gaze direction when the augmented reality device does not support processing of an artificial intelligence model according to an embodiment.

Operations 1605 to 1620 of FIG. 16 correspond to operations 300 to 320 of FIG. 3, and for convenience of explanation, a description of operations 1605 to 1620 will be omitted.

In operation 1630, the augmented reality device 1000 may be configured to identify performance information of the external electronic device 2000. The performance information of the external electronic device 2000 may include specification information of a processor (e.g., NPU) of the external electronic device 2000 executing the second artificial intelligence model 20. The specification information of the processor of the external electronic device 2000 may include information about an amount of computation that the processor of the external electronic device 2000 is able to process. For example, the specification information of the processor of the external electronic device 2000 may include information about an identification value, a precision, or an amount of computation of an artificial intelligence model that may be processed by the NPU of the external electronic device 2000.

As the augmented reality device 1000 is communicatively connected to the external electronic device 2000, the augmented reality device 1000 may be configured to receive performance information of the external electronic device 2000 from the external electronic device 2000. As the augmented reality device 1000 is communicatively connected to the external electronic device 2000, the augmented reality device 1000 may be configured to receive an identification value (e.g., SSID) of the external electronic device 2000 from the external electronic device 2000. In this case, the augmented reality device 1000 may be configured to acquire specification information of an NPU included in the external electronic device 2000 based on an identification value (e.g., SSID) of the external electronic device 2000.

According to an embodiment, the operation for the augmented reality device 1000 to identify performance information of the performance information of the external electronic device 2000 may be omitted.

According to an embodiment, the augmented reality device 1000 may be configured to identify information about the identification value of the second artificial intelligence model 20 or the amount of computation of the second artificial intelligence model 20 to be executed in the external electronic device 2000. For example, the amount of computation of the second artificial intelligence model 20 may include the number of bits of parameters of the second artificial intelligence model 20. The parameter of the second artificial intelligence model 20 may be a parameter of a neural network included in the second artificial intelligence model 20, and may include, for example, an activation parameter and a weight parameter, but may not be limited thereto.

According to an embodiment, the operation 1630 of the augmented reality device 1000 may be omitted

In operation 1640, the augmented reality device 1000 may be configured to select a device and artificial intelligence model for recognizing an object. The augmented reality device 1000 may be configured to select a device and artificial intelligence model for recognizing an object by considering specification information of a processor of the external electronic device 2000 and the accuracy and real-time capability of a service to be provided to a user.

According to an embodiment, the augmented reality device 1000 may select an artificial intelligence model to recognizing the object based on the service providing condition, and may identify the external electronic device 2000 or the server 3000 including the selected artificial intelligence model.

In this case, information about the accuracy and real-time capability of the service to be provided to the user may be configured in advance. For example, the accuracy level and the real-time level of the service to be provided to the user may be configured according to the type of application and a function to be provided to the user by the application.

For example, with regard to a function for detecting the existence of an object in an application for providing object recognition, the accuracy level may be configured to be low and the real-time level may be configured to be high. For example, with regard to a function for providing an identification value and/or detailed information of an object in an application for providing object recognition, the accuracy level may be configured to be high and the real-time level may be configured to be low.

For example, with regard to a function of providing information about an object while driving a vehicle among functions of a navigation application, the accuracy level may be configured to be low and the real-time level may be configured to be high. For example, with regard to a function of providing information about an object while a vehicle is stopped among the functions of the navigation application, the accuracy level may be configured to be high and the real-time level may be configured to be high.

For example, with regard to a function of providing detailed information about an object among functions of an application for providing search information, the accuracy level may be configured to be high and the real-time level may be configured to be low.

For example, when a video playback application provides search information about an object in a video, the real-time level may be configured to be high. For example, with regard to a function of providing text translation information in a translation application, the accuracy level may be configured to be high.

According to an embodiment, the augmented reality device 1000 may be configured to select an artificial intelligence model for object recognition based on an accuracy level and a real-time level of a service to be provided to a user. For example, the amount of computation of the artificial intelligence model according to the accuracy level and the real-time level may be configured in advance.

According to an embodiment, the augmented reality device 1000 may be configured to select a device to perform object recognition by driving an artificial intelligence model. The augmented reality device 1000 may be configured to select a device to perform object recognition from among the external electronic device 2000 and the server 3000. For example, an artificial intelligence model supported by the external electronic device 2000 and the server 3000 may be configured to be configured in advance.

In operation 1650, the augmented reality device 1000 may be configured to acquire a partial image including an object from the captured image. The augmented reality device 1000 may be configured to acquire a partial image including an object corresponding to a user's gaze from the captured image. The augmented reality device 1000 may be configured to identify a location corresponding to the user's gaze in the captured image, and crop a partial image having a predetermined size around the identified location. In this case, the size of the partial image may be determined according to the size of the input image input to the selected artificial intelligence model. For example, the augmented reality device 1000 may be configured to crop a partial image having the size of the input image of the selected artificial intelligence model from the captured image. The augmented reality device 1000 may be configured to additionally adjust the size of the partial image. The augmented reality device 1000 may be configured to additionally adjust the size of the partial image so that the partial image may be input to the artificial intelligence model.

In operation 1660, the augmented reality device 1000 may be configured to acquire a recognition result of an object. The augmented reality device 1000 may be configured to acquire the object recognition result by using the acquired partial image and the selected artificial intelligence model.

When the second artificial intelligence model 20 of the external electronic device 2000 is selected, the augmented reality device 1000 may be configured to provide a partial image to the external electronic device 2000, and the external electronic device 2000 may input the partial image to the second artificial intelligence model 20 of the external electronic device 2000. The external electronic device 2000 may acquire a result value output from the second artificial intelligence model 20 and provide the acquired result value of object recognition to the augmented reality device 1000. The external electronic device 2000 may acquire additional search information by using the object recognition result value, and may provide the acquired search information to the augmented reality device 1000.

When the third artificial intelligence model 30 of the server 3000 is selected, the augmented reality device 1000 may be configured to provide a partial image to the server 3000 through the external electronic device 2000 (for example, the external electronic device 2000 may receive the partial image from the augmented reality device 1000 and subsequently transmit the partial image to the server 3000). The augmented reality device 1000 may be configured to transmit a request to the external electronic device 2000 so as to allow the server 3000 to recognize an object in the partial image, and the external electronic device 2000 may be configured to request object recognition of the partial image from the server 3000 in response to the request of the augmented reality device 1000. The server 3000 may be configured to receive the partial image from the external electronic device 2000 and input the partial image to the third artificial intelligence model so as to acquire an object recognition result. The server 3000 may be configured to provide the object recognition result to the external electronic device 2000, and the external electronic device 2000 may be configured to provide the object recognition result to the augmented reality device 1000. The external electronic device 2000 and/or the server 3000 may be configured to acquire additional search information by using the object recognition result value and provide the acquired search information to the augmented reality device 1000.

The augmented reality device 1000 may be configured to output an object recognition result and/or additional search information.

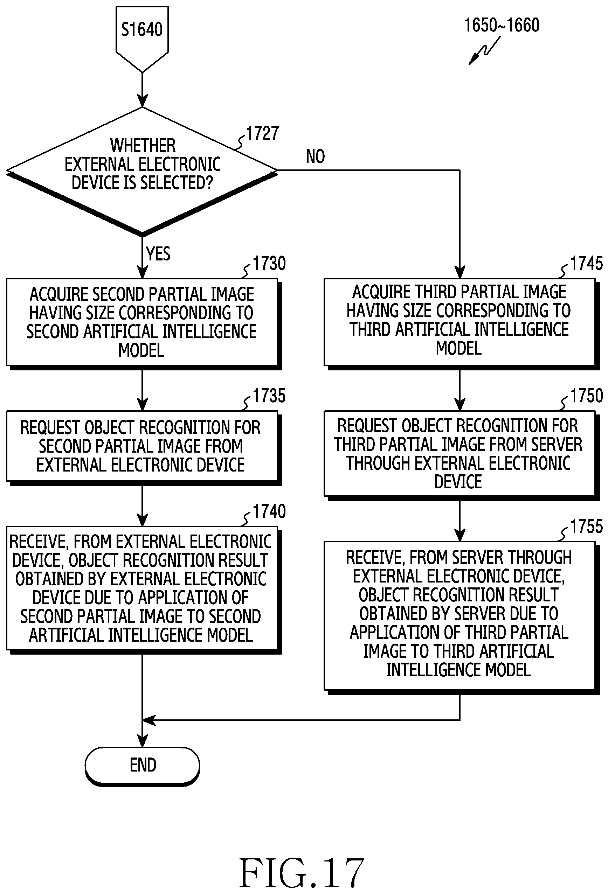

FIG. 17 is a flowchart illustrating a method in which an augmented reality device recognizes an object in a partial image by using at least one of an external electronic device and a server when the augmented reality device does not support processing of an artificial intelligence model processing according to an embodiment.

In operation 1727, the augmented reality device 1000 may be configured to determine whether the external electronic device 2000 is selected. The augmented reality device 1000 may be configured to determine whether the external electronic device 2000 is selected as a device to execute the artificial intelligence model from among the external electronic device 2000 and the server 3000.

As a result of the determination in operation 1727, when it is determined that the external electronic device 2000 is selected by the augmented reality device 1000, the augmented reality device 1000 may be configured to perform operation 1730. Since operations 1730 to 1740 of FIG. 17 correspond to operations 1730 to 1740 of FIG. 7, explanation of operations 1730 to 1740 will be omitted for convenience.

As a result of the determination in operation 1727, when it is determined that the external electronic device 2000 is not selected by the augmented reality device 1000, the augmented reality device 1000 may be configured to perform operation 1745. Since operations 1745 to 1755 of FIG. 17 correspond to operations 1745 to 1755 of FIG. 7, explanations of operations 1745 to 1755 will be omitted for convenience.

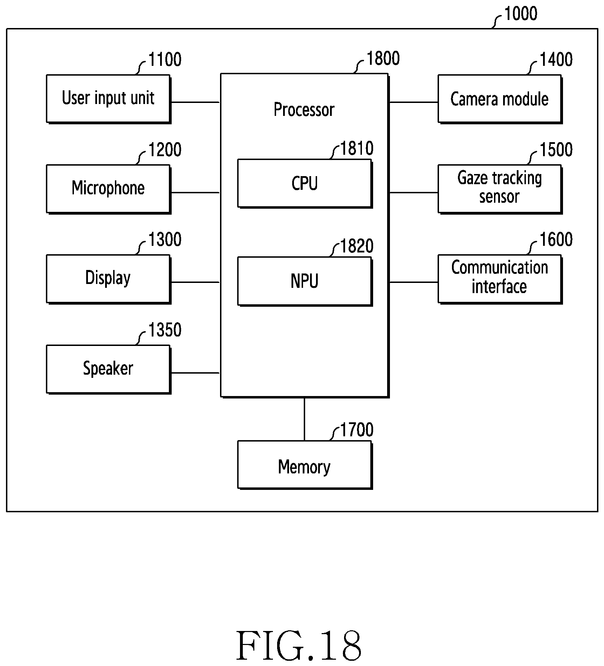

FIG. 18 is a block diagram of an augmented reality device according to an embodiment.

Referring to FIG. 18, an augmented reality device 1000 according to an embodiment may include a user input unit 1100, a microphone 1200, a display 1300, a speaker 1350, a camera module 1400, a gaze tracking sensor 1500, a communication interface 1600, a memory 1700, and a processor 1800. In addition, the processor 1800 may include a CPU 1810 and an NPU 1820. The first artificial intelligence model 10 may be stored in the memory 1700 or stored in an internal memory of the NPU 1820.

The user input unit 1100 refers to a measure through which a user inputs data for controlling the augmented reality device 1000. For example, the user input unit 1100 may include a key pad, a dome switch, a touch pad (a touch capacitive type, a pressure resistive type, an infrared beam sensing type, a surface acoustic wave type, an integral strain gauge type, a Piezo effect type, or the like), a jog wheel, and a jog switch, but is not limited thereto. The user input unit 1100 may receive input from a user to receive a service related to the object recognition.

The microphone 1200 receives an external sound signal and processes the sound signal into electrical voice data. For example, the microphone 1200 may receive a sound signal from an external device or a speaker. The microphone 1200 may use various noise cancellation algorithms for removing noise generated in the process of receiving an external sound signal. The microphone 1200 may receive sound generated around the augmented reality device 1000. The microphone 1200 may receive a user's voice input for controlling the augmented reality device 1000.

The display 1300 displays and outputs information processed by the augmented reality device 1000. For example, the display 1300 may display a user interface for capturing the surroundings of the augmented reality device 1000 and information related to a service provided based on a captured image of the surroundings of the augmented reality device 1000.

According to an embodiment, the display 1300 may provide augmented reality (AR) images. The display 1300 according to an embodiment may include a light guide plate (not shown) and a display module (not shown). When a user wears the device 1000, the light guide plate (not shown) may be made of a transparent material in which a partial area of the rear surface is visible. The light guide plate (not shown) may be configured by a single- or multi-layer flat plate made of a transparent material through which light is reflected and propagated through the interior thereof. The light guide plate (not shown) may be located to face a light-emitting surface of the display module and receive light of a virtual image projected therefrom. Here, the transparent material implies a material through which light may pass, and the transparency may not be 100% and may have a predetermined color. In an embodiment, since the light guide plate (not shown) is formed of a transparent material, the user may not only see a virtual object of a virtual image through the display 1300 but also see an external real scene, and thus the light guide plate (not shown) may be referred to as a see-through display. The display 1300 may provide an augmented reality image by outputting a virtual object of a virtual image through a light guide plate. When the augmented reality device 1000 is a glasses-type device, the display 1300 may include a left display and a right display.

The speaker 1350 may output sound generated by the augmented reality device 1000.

The camera module 1400 may capture the surroundings of the augmented reality device 1000. The camera module 1400 may acquire an image frame such as a still image or a moving image through an image sensor when an application requesting a photographing function is executed. Images captured through the image sensor may be processed through the processor 1800 or a separate image processor (not shown). The camera module 1400 may include, for example, at least one of a rotatable RGB camera module or multiple depth camera modules, but is not limited thereto.

The gaze tracking sensor 1500 may track the gaze of the user wearing the augmented reality device 1000. The gaze tracking sensor 1500 may be installed in a direction toward the user's eyes, and may detect the gaze direction of the user's left eye and the gaze direction of the user's right eye. Detecting the direction of the user's gaze may include acquiring gaze information related to the user's gaze. The gaze information is information related to the user's gaze, and may include, for example, information about the location of the pupil of the user's eyes, the coordinates of the center point of the pupil, and the user's gaze direction. The user's gaze direction may be, for example, a direction of the gaze from the central point of the user's pupil to a place to which the user gazes.

The gaze tracking sensor 1500 may include, for example, at least one of an IR scanner or an image sensor, and when the augmented reality device 1000 is a glasses-type device, multiple gaze tracking sensors may be disposed around the left display and the right display of the augmented reality device 1000 toward the user's eyes, respectively.

The gaze tracking sensor 1500 may detect data related to the gaze of the user's eyes. The user's gaze information may be generated based on data related to the gaze of the user's eyes. The gaze information is information related to the user's gaze, and may include, for example, information about the location of the pupil of the user's eyes, the coordinates of the center point of the pupil, and the direction of the user's gaze. The user's gaze direction may be, for example, a direction of the gaze from the central point of the user's pupil to the place where the user gazes.

The communication interface 1600 may transmit or receive data for a service based on an image acquired by photographing the surroundings of the augmented reality device 1000 to or from the external electronic device 2000 and the server 3000.

The memory 1700 may store programs to be executed by the processor 1800 to be described later, and may store data input to or output from the augmented reality device 1000.

The memory 1700 may include at least one type of storage medium among a flash memory type, a hard disk type, a multimedia card micro type, a card type memory (e.g., SD or XD memory, etc.), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk.

Programs stored in the memory 1700 may be classified into multiple modules according to their functions.

The processor 1800 is configured to control overall operations of the augmented reality device 1000. The processor 1800 may be configured to execute the operation of the augmented reality device 1000 in FIGS. 1 to 17 by executing programs stored in the memory 1700. For example, the processor 1800 may be configured to execute programs stored in the memory 1700, so as to perform overall control of the user input unit 1100, the microphone 1200, the display 1300, the speaker 1350, the camera module 1400, the gaze tracking sensor 1500, the communication interface 1600, the memory 1700, and the like.

The processor 1800 may be configured to execute programs stored in the memory 1700 so as to capture an object by using a camera and acquire a captured image. The processor 1800 may capture an object of the real world by controlling a camera installed toward the front of the augmented reality device 1000. For example, the processor 1800 may capture a still image or a moving image by controlling a camera to capture an object when an application for requesting a photographing function is executed. For example, the processor 1800 may be configured to acquire a still image or moving image by controlling a camera to photograph an object when a user's input command requesting a service requiring a photographing function is received.

The processor 1800 may be configured to identify the user's gaze by executing programs stored in the memory 1700. The processor 1800 may be configured to detect the user's gaze by using the gaze tracking sensor 1500 installed in a direction toward the user's eyes.

The processor 1800 may be configured to identify a condition of providing a service to be provided to a user by executing programs stored in the memory 1700. The service providing condition may be configured in advance in order to provide a high-quality service to a user, and may be configured differently, for example, depending on whether accuracy of the service is important or real-time capability of the service is important. The service providing condition may include, for example, conditions related to a target accuracy, a target latency, a computation demand, and/or a communication state. For example, the target accuracy may include a degree to accurately recognize an object, the target latency may include waiting time required for object recognition, and the computation demand may include the amount of computation of an artificial intelligence model to be used for object recognition. For example, the target accuracy may be quantified and configured by an accuracy level to be described later, and the target latency may be quantified and configured by a real-time level to be described later, but is not limited thereto.

The processor 1800 may be configured to identify service providing conditions based on, for example, at least one of a type of service to be provided to a user, a type of an application executed in relation to the object recognition, or a user's input command requesting the object recognition.

The processor 1800 may be configured to identify performance information of the augmented reality device 1000 and performance information of the external electronic device 2000 by executing programs stored in the memory 1700. The performance information of the augmented reality device 1000 and/or the external electronic device 2000 may include information relating to hardware performance of the augmented reality device 1000 and/or the external electronic device 2000. The performance information of the augmented reality device 1000 and/or the external electronic device 2000 may include information about the performance of processes such as the CPU, NPU, and GPU of the augmented reality device 1000 and/or the external electronic device 2000. In addition, the performance information of the augmented reality device 1000 and/or the external electronic device 2000 may include a type of memory (e.g., SRAM and/or DRAM) in the augmented reality device 1000 and/or the external electronic device 2000, and information about the capacity of the memory. The performance information of the augmented reality device 1000 may include specification information of a processor to execute the first artificial intelligence model 10. For example, the performance information of the augmented reality device 1000 may include specification information of the NPU 1820 of the augmented reality device 1000 to execute the first artificial intelligence model 10. The specification information of the NPU 1820 of the augmented reality device 1000 may include information about an amount of computation that the NPU 1820 of the augmented reality device 1000 is able to process. For example, the specification information of the NPU 1820 of the augmented reality device 1000 may include information about an identification value, a precision, or an amount of computation of an artificial intelligence model that may be processed by the NPU 1820 of the augmented reality device 1000. When the augmented reality device 1000 does not include an NPU, the specification information of the CPU and/or GPU of the augmented reality device 1000 may be used to determine the performance of the augmented reality device 1000.

The performance information of the external electronic device 2000 may include specification information of a processor to execute the second artificial intelligence model 20. For example, the performance information of the augmented reality device 1000 may include specification information of the NPU of the external electronic device 2000 to execute the first artificial intelligence model 10. The specification information of the NPU of the external electronic device 2000 may include information about an amount of computation that the NPU of the external electronic device 2000 is able to process. For example, the specification information of the NPU of the external electronic device 2000 may include information about an identification value, a precision, or an amount of computation of an artificial intelligence model that may be processed by the NPU of the external electronic device 2000. When the external electronic device 2000 does not include an NPU, specification information of the CPU and/or GPU of the external electronic device 2000 may be used to determine the performance of the augmented reality device 1000.

As the augmented reality device 1000 is communicatively connected to the external electronic device 2000, the processor 1800 may be configured to receive the identification value or specification information of the NPU of the external electronic device 2000 from the external electronic device 2000. As the augmented reality device 1000 is communicatively connected to the external electronic device 2000, the processor 1800 may be configured to receive an identification value (e.g., SSID) of the external electronic device 2000 from the external electronic device 2000. In this case, the processor 1800 may be configured to acquire the specification information of the NPU included in the external electronic device 2000 based on the identification value (e.g., SSID) of the external electronic device 2000.

According to an embodiment, the processor 1800 may be configured to identify an identification value of the first artificial intelligence model 10 to be executed in the augmented reality device 1000 or information about an amount of computation of the first artificial intelligence model 10. For example, the amount of computation of the first artificial intelligence model 10 may include the number of bits of parameters of the first artificial intelligence model 10. The parameter of the first artificial intelligence model 10 may be a parameter of a neural network included in the first artificial intelligence model 10, and may include, for example, an activation parameter and a weight parameter, but may not be limited thereto.

In addition, the processor 1800 may be configured to identify an identification value of the second artificial intelligence model 20 to be executed in the external electronic device 2000 or information about an amount of computation of the second artificial intelligence model 20. For example, the amount of computation of the second artificial intelligence model 20 may include the number of bits of parameters of the second artificial intelligence model 20. The parameter of the second artificial intelligence model 20 may be a parameter of a neural network included in the second artificial intelligence model 20, and may include, for example, an activation parameter and a weight parameter, but not limited thereto.

The processor 1800 may be configured to select a device and artificial intelligence model for recognizing an object by executing programs stored in the memory 1700.

The processor 1800 may be configured to select a device and an intelligence model for object recognition by considering the performance information of the NPU 1820 of the augmented reality device 1000, the performance information of the NPU of the external electronic device 2000, and the accuracy and real-time capability of a service to be provided to the user.

In this case, information about the accuracy and real-time capability of the service to be provided to the user may be configured in advance. For example, the accuracy level and the real-time level of the service to be provided to the user may be configured according to the type of application and a function to be provided to the user by the application.

For example, with regard to a function of detecting the existence of an object in an application for providing object recognition, the accuracy level may be configured to be low and the real-time level may be configured to be high. For example, with regard to a function of providing an identification value and/or detailed information of an object in an application for providing object recognition, the accuracy level may be configured to be high and the real-time level may be configured to be low.

For example, with regard to a function of providing information about an object while driving a vehicle among functions of a navigation application, the accuracy level may be configured to be low and the real-time level may be configured to be high. For example, with regard to a function of providing information about an object while a vehicle is stopped among the functions of the navigation application, the accuracy level may be configured to be high and the real-time level may be configured to be high.

For example, with regard to a function of providing detailed information about an object among functions of an application for providing search information, the accuracy level may be configured to be high and the real-time level may be configured to be low.

For example, when a video playback application provides search information about an object in a video, the real-time level may be configured to be high. For example, with regard to a function of providing text translation information in a translation application, the accuracy level may be configured to be high.

According to an embodiment, the augmented reality device 1000 may be configured to select an artificial intelligence model for object recognition based on an accuracy level and a real-time level of a service to be provided to a user. For example, the amount of computation of the artificial intelligence model according to the accuracy level and the real-time level may be configured in advance.

According to an embodiment, the processor 1800 may be configured to select a device to perform object recognition by driving an artificial intelligence model. The augmented reality device 1000 may be configured to select a device to perform object recognition among the augmented reality device 1000, the external electronic device 2000, and the server 3000. For example, an artificial intelligence model supported by the augmented reality device 1000, the external electronic device 2000, and the server 3000 may be configured in advance.

According to an embodiment, a device for object recognition and/or an artificial intelligence model for object recognition may be changed for recognition of a captured image according to a service providing condition. **In** a case of performing object recognition on captured images that are continuously acquired, a service providing condition may be changed during object recognition on the captured images. In this case, the processor 1800 may be configured to change a device and an artificial intelligence model for object recognition by considering the service providing condition, the performance information of the augmented reality device 1000, the performance information of the external electronic device 2000, and the accuracy and real-time capability of a service to be provided to the user.

As a device for recognizing an object and/or an artificial intelligence model for recognizing an object is changed, the processor 1800 may change the size of a partial image to be described later.

The processor 1800 may be configured to acquire a partial image including an object from a captured image by executing programs stored in the memory 1700. The processor 1800 may be configured to acquire a partial image including an object corresponding to the user's gaze from the captured image. The processor 1800 may be configured to identify a location corresponding to the user's gaze in the captured image, and crop a partial image having a predetermined size around the identified location. In this case, the size of the partial image may be determined according to the size of an input image input to the selected artificial intelligence model. For example, the size of the input image of the artificial intelligence model may be configured in advance, and the processor 1800 may be configured to crop a partial image having the size of the input image of the selected artificial intelligence model from the captured image.

The processor 1800 may be configured to further adjust the size of the partial image. The augmented reality device 1000 may be configured to additionally adjust the size of the partial image so that the partial image is able to be input to the artificial intelligence model.

The processor 1800 may be configured to acquire a recognition result of the object. The processor 1800 may be configured to acquire the object recognition result by using the acquired partial image and the selected artificial intelligence model.

When the first artificial intelligence model 10 of the augmented reality device 1000 is selected, the NPU 1820 of the augmented reality device 1000 may be configured to input a partial image to the first artificial intelligence model 10 and acquire a result value output from the first artificial intelligence model 10.

When the second artificial intelligence model 20 of the external electronic device 2000 is selected, the processor 1800 may be configured to provide a partial image to the external electronic device 2000, and the external electronic device 2000 may input the partial image to the second artificial intelligence model 20 of the external electronic device 2000. The external electronic device 2000 may acquire a result value output from the second artificial intelligence model 20 and provide the acquired object recognition result value to the augmented reality device 1000. The external electronic device 2000 may acquire additional search information by using the object recognition result value, and may provide the acquired search information to the augmented reality device 1000.

When the third artificial intelligence model 30 of the server 3000 is selected, the processor 1800 may be configured to provide a partial image to the server 3000 through the external electronic device 2000. The processor 1800 may be configured to transmit a request to the external electronic device 2000 so as to allow the server 3000 to recognize an object in the partial image, and the external electronic device 2000 may be configured to request object recognition of the partial image from the server in response to the request of the augmented reality device 1000. The server 3000 may be configured to receive the partial image from the external electronic device 2000 and input the partial image to the third artificial intelligence model 30 so as to acquire an object recognition result. The server 3000 may be configured to provide the object recognition result to the external electronic device 2000, and the external electronic device 2000 may be configured to provide the object recognition result to the augmented reality device 1000. The external electronic device 2000 and/or the server 3000 may be configured to acquire additional search information by using the object recognition result value and provide the acquired search information to the augmented reality device 1000.

The processor 1800 may be configured to output an object recognition result and/or additional search information.

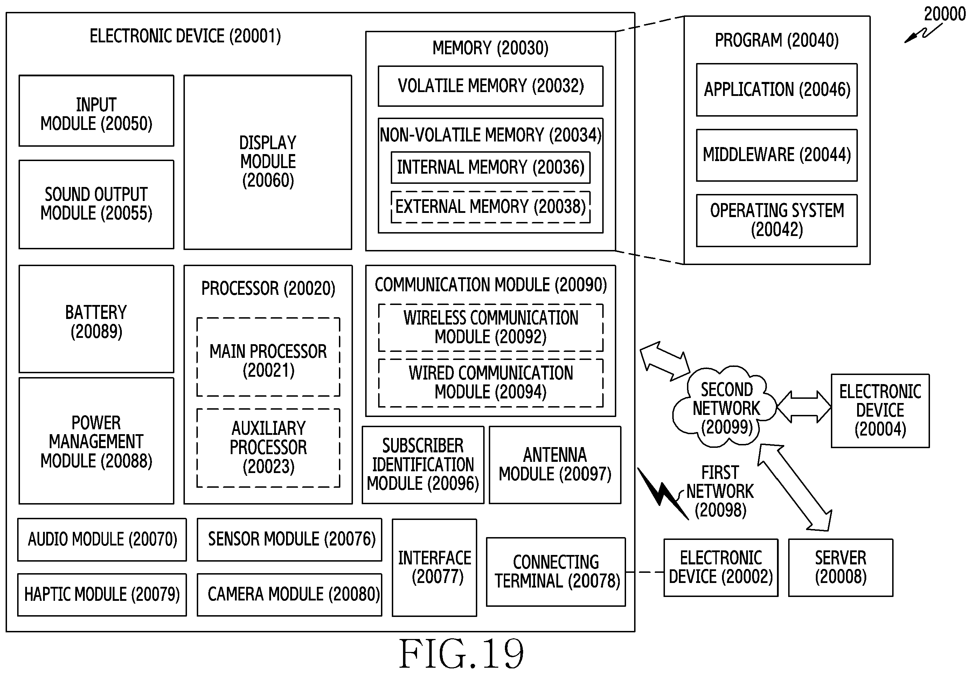

Fig. 19 is a block diagram illustrating an electronic device in a network environment according to various embodiments. Referring to Fig. 19, the electronic device 20001 in the network environment 20000 may communicate with an electronic device 20002 via a first network 20098 (e.g., a short-range wireless communication network), or at least one of an electronic device 20004 or a server 20008 via a second network 20099 (e.g., a long-range wireless communication network). According to an embodiment, the electronic device 20001 may communicate with the electronic device 20004 via the server 20008. According to an embodiment, the electronic device 20001 may include a processor 20020, memory 20030, an input module 20050, a sound output module 20055, a display module 20060, an audio module 20070, a sensor module 20076, an interface 20077, a connecting terminal 20078, a haptic module 20079, a camera module 20080, a power management module 20088, a battery 20089, a communication module 20090, a subscriber identification module(SIM) 20096, or an antenna module 20097. In some embodiments, at least one of the components (e.g., the connecting terminal 20078) may be omitted from the electronic device 20001, or one or more other components may be added in the electronic device 20001. In some embodiments, some of the components (e.g., the sensor module 20076, the camera module 20080, or the antenna module 20097) may be implemented as a single component (e.g., the display module 20060).

The processor 20020 may execute, for example, software (e.g., a program 20040) to control at least one other component (e.g., a hardware or software component) of the electronic device 20001 coupled with the processor 20020, and may perform various data processing or computation. According to one embodiment, as at least part of the data processing or computation, the processor 20020 may store a command or data received from another component (e.g., the sensor module 20076 or the communication module 20090) in volatile memory 20032, process the command or the data stored in the volatile memory 20032, and store resulting data in non-volatile memory 20034. According to an embodiment, the processor 20020 may include a main processor 20021 (e.g., a central processing unit (CPU) or an application processor (AP)), or an auxiliary processor 20023 (e.g., a graphics processing unit (GPU), a neural processing unit (NPU), an image signal processor (ISP), a sensor hub processor, or a communication processor (CP)) that is operable independently from, or in conjunction with, the main processor 20021. For example, when the electronic device 20001 includes the main processor 20021 and the auxiliary processor 20023, the auxiliary processor 20023 may be adapted to consume less power than the main processor 20021, or to be specific to a specified function. The auxiliary processor 20023 may be implemented as separate from, or as part of the main processor 20021.

The auxiliary processor 20023 may control at least some of functions or states related to at least one component (e.g., the display module 20060, the sensor module 20076, or the communication module 20090) among the components of the electronic device 20001, instead of the main processor 20021 while the main processor 20021 is in an inactive (e.g., sleep) state, or together with the main processor 20021 while the main processor 20021 is in an active state (e.g., executing an application). According to an embodiment, the auxiliary processor 20023 (e.g., an image signal processor or a communication processor) may be implemented as part of another component (e.g., the camera module 20080 or the communication module 20090) functionally related to the auxiliary processor 20023. According to an embodiment, the auxiliary processor 20023 (e.g., the neural processing unit) may include a hardware structure specified for artificial intelligence model processing. An artificial intelligence model may be generated by machine learning. Such learning may be performed, e.g., by the electronic device 20001 where the artificial intelligence is performed or via a separate server (e.g., the server 20008). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 20030 may store various data used by at least one component (e.g., the processor 20020 or the sensor module 20076) of the electronic device 20001. The various data may include, for example, software (e.g., the program 20040) and input data or output data for a command related thereto. The memory 20030 may include the volatile memory 20032 or the non-volatile memory 20034.

The program 20040 may be stored in the memory 20030 as software, and may include, for example, an operating system (OS) 20042, middleware 20044, or an application 20046.

The input module 20050 may receive a command or data to be used by another component (e.g., the processor 20020) of the electronic device 20001, from the outside (e.g., a user) of the electronic device 20001. The input module 20050 may include, for example, a microphone, a mouse, a keyboard, a key (e.g., a button), or a digital pen (e.g., a stylus pen).

The sound output module 20055 may output sound signals to the outside of the electronic device 20001. The sound output module 20055 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 20060 may visually provide information to the outside (e.g., a user) of the electronic device 20001. The display module 20060 may include, for example, a display, a hologram device, or a projector and control circuitry to control a corresponding one of the display, hologram device, and projector. According to an embodiment, the display module 20060 may include a touch sensor adapted to detect a touch, or a pressure sensor adapted to measure the intensity of force incurred by the touch.

The audio module 20070 may convert a sound into an electrical signal and vice versa. According to an embodiment, the audio module 20070 may obtain the sound via the input module 20050, or output the sound via the sound output module 20055 or a headphone of an external electronic device (e.g., an electronic device 20002) directly (e.g., wiredly) or wirelessly coupled with the electronic device 20001.

The sensor module 20076 may detect an operational state (e.g., power or temperature) of the electronic device 20001 or an environmental state (e.g., a state of a user) external to the electronic device 20001, and then generate an electrical signal or data value corresponding to the detected state. According to an embodiment, the sensor module 20076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 20077 may support one or more specified protocols to be used for the electronic device 20001 to be coupled with the external electronic device (e.g., the electronic device 20002) directly (e.g., wiredly) or wirelessly. According to an embodiment, the interface 20077 may include, for example, a high definition multimedia interface (HDMI), a universal serial bus (USB) interface, a secure digital (SD) card interface, or an audio interface.

A connecting terminal 20078 may include a connector via which the electronic device 20001 may be physically connected with the external electronic device (e.g., the electronic device 20002). According to an embodiment, the connecting terminal 20078 may include, for example, a HDMI connector, a USB connector, a SD card connector, or an audio connector (e.g., a headphone connector).

The haptic module 20079 may convert an electrical signal into a mechanical stimulus (e.g., a vibration or a movement) or electrical stimulus which may be recognized by a user via his tactile sensation or kinesthetic sensation. According to an embodiment, the haptic module 20079 may include, for example, a motor, a piezoelectric element, or an electric stimulator.

The camera module 20080 may capture a still image or moving images. According to an embodiment, the camera module 20080 may include one or more lenses, image sensors, image signal processors, or flashes.

The power management module 20088 may manage power supplied to the electronic device 20001. According to one embodiment, the power management module 20088 may be implemented as at least part of, for example, a power management integrated circuit (PMIC).

The battery 20089 may supply power to at least one component of the electronic device 20001. According to an embodiment, the battery 20089 may include, for example, a primary cell which is not rechargeable, a secondary cell which is rechargeable, or a fuel cell.

The communication module 20090 may support establishing a direct (e.g., wired) communication channel or a wireless communication channel between the electronic device 20001 and the external electronic device (e.g., the electronic device 20002, the electronic device 20004, or the server 20008) and performing communication via the established communication channel. The communication module 20090 may include one or more communication processors that are operable independently from the processor 20020 (e.g., the application processor (AP)) and supports a direct (e.g., wired) communication or a wireless communication. According to an embodiment, the communication module 20090 may include a wireless communication module 20092 (e.g., a cellular communication module, a short-range wireless communication module, or a global navigation satellite system (GNSS) communication module) or a wired communication module 20094 (e.g., a local area network (LAN) communication module or a power line communication (PLC) module). A corresponding one of these communication modules may communicate with the external electronic device via the first network 20098 (e.g., a short-range communication network, such as Bluetooth^{™}, wireless-fidelity (Wi-Fi) direct, or infrared data association (IrDA)) or the second network 20099 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 20092 may identify and authenticate the electronic device 20001 in a communication network, such as the first network 20098 or the second network 20099, using subscriber information (e.g., international mobile subscriber identity (IMSI)) stored in the subscriber identification module 20096.

The wireless communication module 20092 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 20092 may support a high-frequency band (e.g., the mmWave band) to achieve, e.g., a high data transmission rate. The wireless communication module 20092 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 20092 may support various requirements specified in the electronic device 20001, an external electronic device (e.g., the electronic device 20004), or a network system (e.g., the second network 20099). According to an embodiment, the wireless communication module 20092 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 20097 may transmit or receive a signal or power to or from the outside (e.g., the external electronic device) of the electronic device 20001. According to an embodiment, the antenna module 20097 may include an antenna including a radiating element composed of a conductive material or a conductive pattern formed in or on a substrate (e.g., a printed circuit board (PCB)). According to an embodiment, the antenna module 20097 may include a plurality of antennas (e.g., array antennas). In such a case, at least one antenna appropriate for a communication scheme used in the communication network, such as the first network 20098 or the second network 20099, may be selected, for example, by the communication module 20090 (e.g., the wireless communication module 20092) from the plurality of antennas. The signal or the power may then be transmitted or received between the communication module 20090 and the external electronic device via the selected at least one antenna. According to an embodiment, another component (e.g., a radio frequency integrated circuit (RFIC)) other than the radiating element may be additionally formed as part of the antenna module 20097.

According to various embodiments, the antenna module 20097 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 20001 and the external electronic device 20004 via the server 20008 coupled with the second network 20099. Each of the electronic devices 20002 or 20004 may be a device of a same type as, or a different type, from the electronic device 20001. According to an embodiment, all or some of operations to be executed at the electronic device 20001 may be executed at one or more of the external electronic devices 20002, 20004, or 20008. For example, if the electronic device 20001 should perform a function or a service automatically, or in response to a request from a user or another device, the electronic device 20001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 20001. The electronic device 20001 may provide the outcome, with or without further processing of the outcome, as at least part of a reply to the request. To that end, a cloud computing, distributed computing, mobile edge computing (MEC), or client-server computing technology may be used, for example. The electronic device 20001 may provide ultra low-latency services using, e.g., distributed computing or mobile edge computing. In another embodiment, the external electronic device 20004 may include an internet-of-things (IoT) device. The server 20008 may be an intelligent server using machine learning and/or a neural network. According to an embodiment, the external electronic device 20004 or the server 20008 may be included in the second network 20099. The electronic device 20001 may be applied to intelligent services (e.g., smart home, smart city, smart car, or healthcare) based on 5G communication technology or IoT-related technology.

According to an embodiment of the disclosure, the external electronic device 2000 may correspond to an electronic device 20001 of FIG. 19. In this case, the NPU of the external electronic device 2000 may correspond to an auxiliary processor 20023 of FIG. 19, and the second artificial intelligence model 20 used by the external electronic device 2000 may be stored in the memory 20030 or stored in an internal memory of the NPU of the external electronic device.

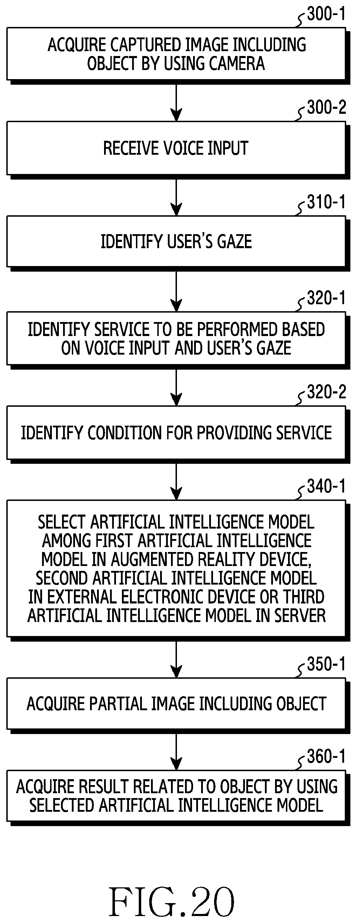

FIG. 20 is a flowchart illustrating a method for acquiring, for providing a service, a result related to an object corresponding to a user's gaze by an augmented reality device according to an embodiment.

In operation 300-1, the augmented reality device 1000 may be configured to acquire a captured image including an object by using a camera. The augmented reality device 1000 may be configured to capture an image of an object of the real world using a camera installed toward the front of the augmented reality device 1000. For example, the augmented reality device 1000 may be configured to acquire a still image or a moving image by capturing an image of an object by controlling a camera when an application requesting a photographing function is executed. For example, the augmented reality device 1000 may be configured to acquire a still image or a moving image by capturing an image of an object by controlling a camera when a user's input command requesting a service requiring a photographing function is received.

In operation 300-2, the augmented reality device 1000 may be configured to receive a voice input. A user may input the voice input requesting a service related to an object into the augmented reality device 1000. For example, the user may input a voice input, such as "what is the name of that dog?", "please translate it", and "what is the name of that building?" to the augmented reality device 1000.

In operation 310-1, the augmented reality device 1000 may be configured to identify the user's gaze. For example, the augmented reality device 1000 may be configured to detect the user's gaze using a gaze tracking sensor installed in a direction toward the user's eyes. Detecting the user's gaze may include acquiring gaze information related to the user's gaze. The gaze tracking sensor may include, for example, at least one of an IR scanner or an image sensor, and when the augmented reality device 1000 is a glasses-type device, multiple gaze tracking sensors may be respectively arranged toward the user's eyes around a left display and a right display of the augmented reality device 1000 (for example, the left display and right display may correspond to a left lens and right lens of the glasses-type device, respectively).

According to an embodiment, the augmented reality device 1000 may be configured to identify a user's gaze detected by using the gaze tracking sensor, and may identify an object corresponding to the user's gaze from a captured image (for example, an image may be captured which corresponds to an image viewable to the user, using the augmented reality device 1000, wherein the image may include the object; the object may then be identified from the captured image).

For example, the augmented reality device 1000 may be configured to sense the user's eyes at a predetermined time interval and identify the user's gaze in case that an application requesting a photographing function is executed. For example, the augmented reality device 1000 may be configured to sense the user's eyes and identify the user's gaze in case that the user's input command requesting a service requiring a photographing function is received. For example, the augmented reality device 1000 may be configured to sense the user's eyes and identify the user's gaze such that when a photographing function is required to be executed, an image which corresponds to the user's gaze can be captured in real time.

In operation 320-1, the augmented reality device 1000 may be configured to identify a service to be performed based on the voice input and the user's gaze.

The augmented reality device 1000 may identify a service related to an identification and/or a recognition of the object corresponding to the user's gaze, based on an interpretation result of the voice input. For example, the augmented reality device 1000 may identify the service based on at least one of a type of service to be provided to the user, a type of an application executed in relation to the object, or a function of the application executed in relation to the object.

According to an embodiment, the augmented reality device 1000 may be configured to identify an application being executed and a function of the application. The augmented reality device 1000 may be configured to identify an application to provide a service according to a user's voice input and a function of the application. When an application to provide a service according to the user's voice input is not being executed, the augmented reality device 1000 may be configured to execute an application to provide a service according to the user's voice input. Alternatively, an application for providing a service according to the user's voice input may be executed in the augmented reality device 1000 and/or the external electronic device 2000.

For example, when the user's voice input is "what's the name of that dog?", the augmented reality device 1000 may be configured to identify a search function of an application for providing a search service. For example, when the user's voice input is "please translate it", the augmented reality device 1000 may be configured to identify a translation function of an application for providing a translation service. For example, when the user's voice input is "what's the name of that building?", the augmented reality device 1000 may be configured to identify a search function of a navigation application.

In operation 320-2, the augmented reality device 1000 may be configured to identify a condition of providing a service to be provided to the user. The condition of providing the service (for example, the service providing condition) may be a preset condition necessary to provide a high-quality service to the user. For example, the service providing condition may be a condition set in relation to arithmetic processing of an image for object recognition and/or object identification. According to an embodiment, the service providing condition may be configured in advance according to predetermined standards in order to provide high-quality services to users, and may be configured differently, for example, depending on whether accuracy of the service is important or real-time capability of the service is important. Conditions for providing services may include, for example, conditions related to a target accuracy, a target latency, a computation demand, and/or a communication state. For example, the target accuracy may include a degree to accurately recognize an object (for example, the target accuracy may include a required level of detail for recognizing the object and, if the target accuracy includes a high level of detail, the augmented reality device 1000 may be configured to recognize the object using at least one of the second artificial intelligence model 20 and the third artificial intelligence model 30), the target latency may include waiting time required for object recognition, and the computation demand may include the amount of computation of an artificial intelligence model to be used for object recognition (for example, if the computation demand includes an amount of computation which is too high for the first artificial intelligence model 10, the augmented reality device 1000 may be configured to recognize the object using at least one of the second artificial intelligence model 20 and the third artificial intelligence model 30). For example, the target accuracy may be digitized and configured by an accuracy level, and the target latency may be digitized and configured by a real-time level, but is not limited thereto.

In operation 340-1, the augmented reality device 1000 may be configured to select an artificial intelligence model among the first artificial intelligence model 10 in the augmented reality device 1000, the second artificial intelligence model 20 in the external electronic device 2000 or the third artificial intelligence model 30 in the server 3000.

The augmented reality device 1000 may be configured to select an intelligence model for object recognition by considering the accuracy and/or the real-time capability of the service to be provided to the user. For example, if the service to be provided to the user requires high accuracy, the second artificial intelligence model 20 in the external electronic device 2000 may be selected. In another example, if the service to be provided to the user requires real-time capability, the first artificial intelligence model 10 in the augmented reality device 1000 may be selected.

According to an embodiment, the augmented reality device 1000 may select an artificial intelligence model to recognizing the object based on the service providing condition, and may identify the external electronic device 2000 or the server 3000 including the selected artificial intelligence model.

In this case, information about the accuracy and real-time capability of the service to be provided to the user may be configured in advance. For example, the accuracy level and the real-time level of the service to be provided to the user may be configured according to the type of application and a function to be provided to the user by the application.

For example, with regard to a function of detecting the existence of an object in an application for providing object recognition, the accuracy level may be configured to be low and the real-time level may be configured to be high. For example, in a case of detecting whether a specific object exists in a captured image, the accuracy level may be configured to be low and the real-time level may be configured to be high. For example, when a gesture of a user's hand is detected from a captured image and the type of gesture is classified, the accuracy level may be configured to be low and the real-time level may be configured to be high.

In addition, for example, with regard to a function of providing an identification value and/or detailed information of an object in an application for providing object recognition, the accuracy level may be configured to be high and the real-time level may be configured to be low.

For example, with regard to a function of providing information about an object while driving a vehicle among functions of a navigation application, the accuracy level may be configured to be low and the real-time level may be configured to be high. For example, with regard to a function of providing information about an object while a vehicle is stopped among the functions of the navigation application, the accuracy level may be configured to be high and the real-time level may be configured to be high.

For example, with regard to a function of providing detailed information about an object among functions of an application for providing search information, the accuracy level may be configured to be high and the real-time level may be configured to be low.

For example, when a video playback application provides search information about an object in a video, the real-time level may be configured to be high. For example, with regard to a function of providing text translation information in a translation application, the accuracy level may be configured to be high.

According to an embodiment, the augmented reality device 1000 may be configured to select an artificial intelligence model for object recognition based on an accuracy level and a real-time level of a service to be provided to a user. For example, as shown in Table 1, the amount of computation of the artificial intelligence model according to the accuracy level and the real-time level may be configured in advance.

According to an embodiment, for example, when a gesture of a user is detected and the type of the gesture is identified, an artificial intelligence model having a low amount of computation and using a large-size partial image as an input may be selected.

According to an embodiment, the accuracy level and real-time level of a service to be provided to the user may be changed according to whether or not the user's gaze is maintained on the object to be recognized. For example, the real-time level may be set high while the user's gaze is directed toward the object (or the object's surroundings), and the accuracy level may be set high while the user's gaze is not directed toward the object (or the object's surroundings).

According to an embodiment, the augmented reality device 1000 may be configured to select a device to perform object recognition by driving an artificial intelligence model. The augmented reality device 1000 may be configured to select a device to perform object recognition from among the augmented reality device 1000, the external electronic device 2000, and the server 3000. For example, as shown in Table 2, an artificial intelligence model supported by the augmented reality device 1000, the external electronic device 2000, and the server 3000 may be configured in advance.

According to an embodiment, a device for recognizing an object and/or an artificial intelligence model to recognize the object may be changed for recognition or a captured image according to a service providing condition. For example, in a case of performing object recognition for captured images that are continuously acquired, a service providing condition may be changed in the middle of object recognition for the captured images. In this case, the augmented reality device 1000 may be configured to change a device and an AI model for object recognition by considering service providing conditions, performance information of the augmented reality device 1000, performance information of the external electronic device 2000, and the accuracy and real-time capability of the service to be provided to a user.

As a device for recognizing an object and/or an artificial intelligence model to recognize the object is changed, the augmented reality device 1000 may be configured to change the size of a partial image.

In operation 350-1, the augmented reality device 1000 may be configured to acquire a partial image including an object from the captured image. The augmented reality device 1000 may be configured to acquire a partial image including an object corresponding to the user's gaze from the captured image. The augmented reality device 1000 may be configured to identify a location corresponding to the user's gaze in the captured image, and crop a partial image having a predetermined size around the identified location. In this case, the size of the partial image may be determined according to the size of the input image input to the selected artificial intelligence model. For example, the size of the input image of the artificial intelligence model may be preconfigured as shown in Table 2, and the augmented reality device 1000 may be configured to crop a partial image having the size of the input image of the selected artificial intelligence model from the captured image.

In Table 2, the input image of the artificial intelligence model is configured to have various sizes, but is not limited thereto. For example, the greater the amount of computation of the artificial intelligence model, the greater the configured size of the input image corresponding to the artificial intelligence model.

The augmented reality device 1000 may be configured to additionally adjust the size of the partial image. The augmented reality device 1000 may be configured to additionally adjust the size of the partial image so that the partial image may be input to the artificial intelligence model.

In operation 360-1, the augmented reality device 1000 may be configured to acquire a result related to the object by using the selected artificial intelligence model to provide the service. The augmented reality device 1000 may be configured to acquire the object recognition result by using the acquired partial image and the selected artificial intelligence model.

When the first artificial intelligence model 10 of the augmented reality device 1000 is selected, the augmented reality device 1000 may be configured to input a partial image to the first artificial intelligence model 10 and acquire a result value output from the first artificial intelligence model 10.

When the second artificial intelligence model 20 of the external electronic device 2000 is selected, the augmented reality device 1000 may be configured to provide a partial image to the external electronic device 2000, and the external electronic device 2000 may input the partial image to the second artificial intelligence model 20 of the external electronic device 2000. The external electronic device 2000 may acquire a result value output from the second artificial intelligence model 20 and provide the acquired result value for object recognition to the augmented reality device 1000. The external electronic device 2000 may be configured to acquire additional search information by using the object recognition result value, and may provide the acquired search information to the augmented reality device 1000.

When the third artificial intelligence model 30 of the server 3000 is selected, the augmented reality device 1000 may be configured to provide a partial image to the server 3000 through the external electronic device 2000. The augmented reality device 1000 may be configured to transmit a request to the external electronic device 2000 so as to allow the server 3000 to recognize an object in the partial image, and the external electronic device 2000 may be configured to request object recognition of the partial image from the server in response to the request of the augmented reality device 1000. The server 3000 may be configured to receive the partial image from the external electronic device 2000 and input the partial image to the third artificial intelligence model so as to acquire an object recognition result. The server 3000 may be configured to provide the object recognition result to the external electronic device 2000, and the external electronic device 2000 may be configured to provide the object recognition result to the augmented reality device 1000. The external electronic device 2000 and/or the server 3000 may be configured to acquire additional search information by using the object recognition result value and provide the acquired search information to the augmented reality device 1000.

The augmented reality device 1000 may provide a service related to the object to the user. The augmented reality device 1000 may be configured to output an object recognition result and/or additional search information.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 20040) including one or more instructions that are stored in a storage medium (e.g., internal memory 20036 or external memory 20038) that is readable by a machine (e.g., the electronic device 20001). For example, a processor (e.g., the processor 20020) of the machine (e.g., the electronic device 20001) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A method performed by an augmented reality, AR, device including a camera, the method comprising:
acquiring (300, 300-1), via the camera, a captured image of a physical environment surrounding the AR device, the captured image including an object in the physical environment;
receiving a voice input (300, 300-2) from a user of the AR device;
identifying (310, 310-1) a gaze of the user;
identifying (320, 320-1) a service related to the object included in the captured image, to be performed based on the voice input, wherein the object corresponds to the gaze of the user;
identifying (320, 320-2) a condition for providing the service, wherein the condition for providing the service is related to at least one of: a target accuracy of the service, a target latency of the service, an amount of computation of an artificial intelligence model to be used for object recognition, or a communication state of the AR device;
based on the condition for providing the service, selecting (340, 340-1) one of a first artificial intelligence model in the AR device, a second artificial intelligence model in an external electronic device connected to the AR device, or a third artificial intelligence model in a server, wherein each of the first artificial intelligence model in the AR device, the second artificial intelligence model in the external electronic device connected to the AR device and the third artificial intelligence model in the server is trained for object recognition, and
wherein the first artificial intelligence model, the second artificial intelligence model, and the third artificial intelligence model differ in accuracy;
acquiring (360, 360-1), for providing the service, an object recognition result of the object from the selected artificial intelligence model; and
providing the service to the user.

2. The method of claim 1, the method further comprises acquiring (350, 350-1) a partial image including the object from the captured image, the partial image having a size corresponding to the selected artificial intelligence model, and
wherein the acquiring the object recognition result comprises acquiring the object recognition result based on the partial image.

3. The method of claim 2, wherein the acquiring (360) the object recognition result comprises:
acquiring the object recognition result by using the first artificial intelligence model in the AR device, according to the first artificial intelligence model in the AR device being selected;
requesting the object recognition result while providing the partial image to the external electronic device, according to the second artificial intelligence model in the external electronic device being selected; and
requesting the object recognition result while providing the partial image to the server through the external electronic device, according to the third artificial intelligence model in the server being selected.

4. The method of claim 1, wherein the AR device is connected with the external electronic device through a short-range wireless communication, and
wherein the server is connected with at least one of the external electronic device or the AR device through a long-range wireless communication.

5. The method of claim 1, wherein the first artificial intelligence model in the AR device, the second artificial intelligence model in the external electronic device and the third artificial intelligence model in the server are comprised of multiple neural network layers and configured such that a number of bits of an output value of an activation function and a number of bits of a weight configured between the layers are different from each other.

6. The method of claim 2, wherein, for object recognition with regard to multiple captured images including the captured image, the selected artificial intelligence model to recognize the object is changeable based on the condition for providing the service, and
a size of the partial image to be used by the selected artificial intelligence model is changed according to the selected artificial intelligence model being changed.

7. The method of claim 2, further comprising identifying a resolution of an input image configured for the selected artificial intelligence model, and
wherein the acquiring of the partial image comprises cropping the partial image from the captured image so that the partial image has the identified resolution.

8. The method of claim 1, wherein the selecting one of the first, second and third artificial intelligence models comprises:
when a communication state of the AR device is stable, selecting one of the second artificial intelligence model in the external electronic device or the third artificial intelligence model in the server, and
when the communication state of the AR device is unstable, selecting the first artificial intelligence model in the AR device.

9. The method of claim 1, wherein the selecting one of the first, second and third artificial intelligence models comprises:
when the object is a text and the service is a translation service, selecting one of the second artificial intelligence model in the external electronic device or the third artificial intelligence model in the server, and
when the object is the text and the service is a word finding service, selecting the first artificial intelligence model in the AR device.

10. The method of claim 1, wherein the target accuracy and target latency are changed depending on whether the gaze of the user is maintained with respect to the object.

11. An augmented reality, AR, device (1000) comprising:
a communication interface (1600) configured to communicate with an external electronic device (2000);
a camera (1400);
a gaze tracking sensor (1500) configured to detect a gaze of a user;
a processor(1800); and
memory (1700) storing instructions that, when executed by the processor, cause the AR device to:
acquire (300, 300-1), via the camera, a captured image of a physical environment surrounding the AR device, the captured image including an object in the physical environment;
identify (310, 310-1) the gaze of the user;
receive a voice input (300, 300-2);
identify (320, 320-1) a service related to the object included in the captured image, to be performed based on the voice input, wherein the object corresponds to the gaze of the user;
identify (320, 320-2) a condition for providing the service, wherein the condition for providing the service is related to at least one of: a target accuracy of the service, a target latency of the service, an amount of computation of an artificial intelligence model to be used for object recognition, or a communication state of the AR device;
based on the condition for providing the service, select (340, 340-1) one of a first artificial intelligence model in the AR device, a second artificial intelligence model in an external electronic device connected to the AR device, or a third artificial intelligence model in a server, wherein each of the first artificial intelligence model in the AR device, the second artificial intelligence model in the external electronic device connected to the AR device and the third artificial intelligence model in the server is trained for object recognition, and
wherein the first artificial intelligence model, the second artificial intelligence model, and the third artificial intelligence model differ in accuracy;
acquire (360, 360-1), for providing the service, an object recognition result of the object from the selected artificial intelligence model; and
provide the service to the user.

12. The AR device of claim 11, wherein the memory stores the instructions that, when executed by the processor, cause the AR device to:
acquire (350, 350-1) a partial image including the object from the captured image, the partial image having a size corresponding to the selected artificial intelligence model, and
acquire the object recognition result based on the partial image.

13. The AR device of claim 12, wherein the memory stores the instructions that, when executed by the processor, cause the AR device to:
acquire the object recognition result by using the first artificial intelligence model in the AR device, according to the first artificial intelligence model in the AR device being selected;
request the object recognition result while providing the partial image to the external electronic device, according to the second artificial intelligence model in the external electronic device being selected; and
request the object recognition result while providing the partial image to the server through the external electronic device, according to the third artificial intelligence model in the server being selected.

14. The AR device of claim 11, wherein the first artificial intelligence model in the AR device, the second artificial intelligence model in the external electronic device and the third artificial intelligence model in the server are comprised of multiple neural network layers and configured such that a number of bits of an output value of an activation function and a number of bits of a weight configured between the layers are different from each other.

15. A computer-readable recording medium storing instructions which, when executed by a processor, cause the processor to perform operations comprising:
acquiring (300, 300-1), via a camera, a captured image of a physical environment surrounding an augmented reality, AR, device, the captured image including an object in the physical environment;
receive (300, 300-2) a voice input from a user of the AR device;
identifying (310, 310-1) a gaze of a user;
identifying (320, 320-1) a service related to the object included in the captured image, to be performed based on the voice input, wherein the object corresponds to the gaze of the user;
identifying (320, 320-2) a condition for providing the service, wherein the condition for providing the service is related to at least one of: a target accuracy of the service, a target latency of the service, an amount of computation of an artificial intelligence model to be used for object recognition, or a communication state of the AR device;
based on the condition for providing the service, selecting (340, 340-1) one of a first artificial intelligence model in the AR device, a second artificial intelligence model in an external electronic device connected to the AR device, or a third artificial intelligence model in a server, wherein each of the first artificial intelligence model in the AR device, the second artificial intelligence model in the external electronic device connected to the AR device and the third artificial intelligence model in the server is trained for object recognition, and
wherein the first artificial intelligence model, the second artificial intelligence model, and the third artificial intelligence model differ in accuracy;
acquiring (360, 360-1), for providing the service, an object recognition result of the object from the selected artificial intelligence model; and
providing the service to the user.

## Patentansprüche

1. Verfahren, das durch eine Vorrichtung für erweiterte Realität, AR-Vorrichtung, durchgeführt wird, die eine Kamera enthält, wobei das Verfahren Folgendes umfasst:
Erlangen (300, 300-1) eines erfassten Bildes einer physischen Umgebung, die die AR-Vorrichtung umgibt, über die Kamera, wobei das erfasste Bild ein Objekt in der physischen Umgebung enthält;
Empfangen einer Spracheingabe (300, 300-2) von einem Benutzer der AR-Vorrichtung;
Identifizieren (310, 310-1) eines Blicks des Benutzers;
Identifizieren (320, 320-1) eines Dienstes, der sich auf das Objekt bezieht, das in dem erfassten Bild enthalten ist, der basierend auf der Spracheingabe durchzuführen ist, wobei das Objekt dem Blick des Benutzers entspricht;
Identifizieren (320, 320-2) einer Bedingung für ein Bereitstellen des Dienstes, wobei sich die Bedingung für ein Bereitstellen des Dienstes auf mindestens eines von Folgenden bezieht: eine Zielgenauigkeit des Dienstes, eine Ziellatenz des Dienstes, eine Berechnungsmenge eines Modells künstlicher Intelligenz, das für Objekterkennung zu verwenden ist, oder einen Kommunikationszustand der AR-Vorrichtung;
basierend auf der Bedingung für ein Bereitstellen des Dienstes, Auswählen (340, 340-1) eines von einem ersten Modell künstlicher Intelligenz in der AR-Vorrichtung, einem zweiten Modell künstlicher Intelligenz in einer externen elektronischen Vorrichtung, die mit der AR-Vorrichtung verbunden ist, oder einem dritten Modell künstlicher Intelligenz in einem Server, wobei jedes von dem ersten Modell künstlicher Intelligenz in der AR-Vorrichtung, dem zweiten Modell künstlicher Intelligenz in der externen elektronischen Vorrichtung, die mit der AR-Vorrichtung verbunden ist, und dem dritten Modell künstlicher Intelligenz in dem Server für Objekterkennung trainiert ist, und
wobei sich das erste Modell künstlicher Intelligenz, das zweite Modell künstlicher Intelligenz und das dritte Modell künstlicher Intelligenz in Genauigkeit unterscheiden;
Erlangen (360, 360-1), zum Bereitstellen des Dienstes, eines Objekterkennungsergebnisses des Objekts aus dem ausgewählten Modell künstlicher Intelligenz; und
Bereitstellen des Dienstes für den Benutzer.

2. Verfahren nach Anspruch 1, wobei das Verfahren ferner Erlangen (350, 350-1) eines Teilbilds, das das Objekt enthält, aus dem erfassten Bild umfasst, wobei das Teilbild eine Größe aufweist, die dem ausgewählten Modell künstlicher Intelligenz entspricht, und
wobei das Erlangen des Objekterkennungsergebnisses Erlangen des Objekterkennungsergebnisses basierend auf dem Teilbild umfasst.

3. Verfahren nach Anspruch 2, wobei das Erlangen (360) des Objekterkennungsergebnisses Folgendes umfasst:
Erlangen des Objekterkennungsergebnisses unter Verwendung des ersten Modells künstlicher Intelligenz in der AR-Vorrichtung gemäß einer Auswahl des ersten Modells künstlicher Intelligenz in der AR-Vorrichtung;
Anfordern des Objekterkennungsergebnisses, während der externen elektronischen Vorrichtung das Teilbild bereitgestellt wird, gemäß einer Auswahl des zweiten Modells künstlicher Intelligenz in der externen elektronischen Vorrichtung; und
Anfordern des Objekterkennungsergebnisses, während dem Server das Teilbild durch die externe elektronische Vorrichtung bereitgestellt wird, gemäß einer Auswahl des dritten Modells künstlicher Intelligenz in dem Server.

4. Verfahren nach Anspruch 1, wobei die AR-Vorrichtung mit der externen elektronischen Vorrichtung über eine drahtlose Nahbereichskommunikation verbunden ist, und
wobei der Server über eine drahtlose Fernbereichskommunikation mit mindestens einer von der externen elektronischen Vorrichtung oder der AR-Vorrichtung verbunden ist.

5. Verfahren nach Anspruch 1, wobei das erste Modell künstlicher Intelligenz in der AR-Vorrichtung, das zweite Modell künstlicher Intelligenz in der externen elektronischen Vorrichtung und das dritte Modell künstlicher Intelligenz in dem Server aus mehreren neuronalen Netzwerkschichten umfasst und derart konfiguriert sind, dass sich eine Anzahl von Bits eines Ausgabewerts einer Aktivierungsfunktion und eine Anzahl von Bits einer Gewichtung, die zwischen den Schichten konfiguriert ist, voneinander unterscheiden.

6. Verfahren nach Anspruch 2, wobei zur Objekterkennung im Hinblick auf mehrere erfasste Bilder, die das erfasste Bild enthalten, das ausgewählte Modell künstlicher Intelligenz zum Erkennen des Objekts basierend auf der Bedingung für ein Bereitstellen des Dienstes änderbar ist und
eine Größe des durch das ausgewählte Modell künstlicher Intelligenz zu verwendenden Teilbilds gemäß einer Änderung des ausgewählten Modells künstlicher Intelligenz geändert wird.

7. Verfahren nach Anspruch 2, ferner umfassend Identifizieren einer Auflösung eines Eingangsbilds, das für das ausgewählte Modell künstlicher Intelligenz konfiguriert ist, und
wobei das Erlangen des Teilbilds Zuschneiden des Teilbilds aus dem erfassten Bild umfasst, sodass das Teilbild die identifizierte Auflösung aufweist.

8. Verfahren nach Anspruch 1, wobei das Auswählen eines von dem ersten, dem zweiten und dem dritten Modell künstlicher Intelligenz Folgendes umfasst:
wenn ein Kommunikationszustand der AR-Vorrichtung stabil ist, Auswählen eines von dem zweiten Modell künstlicher Intelligenz in der externen elektronischen Vorrichtung oder dem dritten Modell künstlicher Intelligenz in dem Server und,
wenn der Kommunikationszustand der AR-Vorrichtung instabil ist, Auswählen des ersten Modells künstlicher Intelligenz in der AR-Vorrichtung.

9. Verfahren nach Anspruch 1, wobei das Auswählen eines von dem ersten, dem zweiten und dem dritten Modell künstlicher Intelligenz Folgendes umfasst:
wenn das Objekt ein Text ist und der Dienst ein Übersetzungsdienst ist, Auswählen eines von dem zweiten Modell künstlicher Intelligenz in der externen elektronischen Vorrichtung oder dem dritten Modell künstlicher Intelligenz in dem Server und,
wenn das Objekt der Text ist und der Dienst ein Wortsuchdienst ist, Auswählen des ersten Modells künstlicher Intelligenz in der AR-Vorrichtung.

10. Verfahren nach Anspruch 1, wobei die Zielgenauigkeit und die Ziellatenz in Abhängigkeit davon geändert werden, ob der Blick des Benutzers in Bezug auf das Objekt aufrechterhalten wird.

11. Vorrichtung (1000) für erweiterte Realität, AR, umfassend:
eine Kommunikationsschnittstelle (1600), die dazu konfiguriert ist, mit einer externen elektronischen Vorrichtung (2000) zu kommunizieren;
eine Kamera (1400);
einen Blickverfolgungssensor (1500), der dazu konfiguriert ist, einen Blick eines Benutzers zu erkennen;
einen Prozessor (1800); und
einen Speicher (1700), der Anweisungen speichert, die, wenn sie durch den Prozessor ausgeführt werden, die AR-Vorrichtung zu Folgendem veranlassen:
Erlangen (300, 300-1) eines erfassten Bildes einer physischen Umgebung, die die AR-Vorrichtung umgibt, über die Kamera, wobei das erfasste Bild ein Objekt in der physischen Umgebung enthält;
Identifizieren (310, 310-1) des Blicks des Benutzers;
Empfangen einer Spracheingabe (300, 300-2);
Identifizieren (320, 320-1) eines Dienstes, der sich auf das Objekt bezieht, das in dem erfassten Bild enthalten ist, der basierend auf der Spracheingabe durchzuführen ist, wobei das Objekt dem Blick des Benutzers entspricht;
Identifizieren (320, 320-2) einer Bedingung für ein Bereitstellen des Dienstes, wobei sich die Bedingung für ein Bereitstellen des Dienstes auf mindestens eines von Folgenden bezieht: eine Zielgenauigkeit des Dienstes, eine Ziellatenz des Dienstes, eine Berechnungsmenge eines Modells künstlicher Intelligenz, das für Objekterkennung zu verwenden ist, oder einen Kommunikationszustand der AR-Vorrichtung;
basierend auf der Bedingung für ein Bereitstellen des Dienstes, Auswählen (340, 340-1) eines von einem ersten Modell künstlicher Intelligenz in der AR-Vorrichtung, einem zweiten Modell künstlicher Intelligenz in einer externen elektronischen Vorrichtung, die mit der AR-Vorrichtung verbunden ist, oder einem dritten Modell künstlicher Intelligenz in einem Server, wobei jedes von dem ersten Modell künstlicher Intelligenz in der AR-Vorrichtung, dem zweiten Modell künstlicher Intelligenz in der externen elektronischen Vorrichtung, die mit der AR-Vorrichtung verbunden ist, und dem dritten Modell künstlicher Intelligenz in dem Server für Objekterkennung trainiert ist, und
wobei sich das erste Modell künstlicher Intelligenz, das zweite Modell künstlicher Intelligenz und das dritte Modell künstlicher Intelligenz in Genauigkeit unterscheiden;
Erlangen (360, 360-1), zum Bereitstellen des Dienstes, eines Objekterkennungsergebnisses des Objekts aus dem ausgewählten Modell künstlicher Intelligenz; und
Bereitstellen des Dienstes für den Benutzer.

12. AR-Vorrichtung nach Anspruch 11, wobei der Speicher die Anweisungen speichert, die, wenn sie durch den Prozessor ausgeführt werden, die AR-Vorrichtung zu Folgendem veranlassen:
Erlangen (350, 350-1) eines Teilbilds, das das Objekt enthält, aus dem erfassten Bild, wobei das Teilbild eine Größe aufweist, die dem ausgewählten Modell künstlicher Intelligenz entspricht, und
Erlangen des Objekterkennungsergebnisses basierend auf dem Teilbild.

13. AR-Vorrichtung nach Anspruch 12, wobei der Speicher die Anweisungen speichert, die, wenn sie durch den Prozessor ausgeführt werden, die AR-Vorrichtung zu Folgendem veranlassen:
Erlangen des Objekterkennungsergebnisses unter Verwendung des ersten Modells künstlicher Intelligenz in der AR-Vorrichtung gemäß einer Auswahl des ersten Modells künstlicher Intelligenz in der AR-Vorrichtung;
Anfordern des Objekterkennungsergebnisses, während der externen elektronischen Vorrichtung das Teilbild bereitgestellt wird, gemäß einer Auswahl des zweiten Modells künstlicher Intelligenz in der externen elektronischen Vorrichtung; und
Anfordern des Objekterkennungsergebnisses, während dem Server das Teilbild durch die externe elektronische Vorrichtung bereitgestellt wird, gemäß einer Auswahl des dritten Modells künstlicher Intelligenz in dem Server.

14. AR-Vorrichtung nach Anspruch 11, wobei das erste Modell künstlicher Intelligenz in der AR-Vorrichtung, das zweite Modell künstlicher Intelligenz in der externen elektronischen Vorrichtung und das dritte Modell künstlicher Intelligenz in dem Server aus mehreren neuronalen Netzwerkschichten umfasst sind und derart konfiguriert sind, dass sich eine Anzahl von Bits eines Ausgabewerts einer Aktivierungsfunktion und eine Anzahl von Bits einer Gewichtung, die zwischen den Schichten konfiguriert ist, voneinander unterscheiden.

15. Computerlesbares Aufzeichnungsmedium, das Anweisungen speichert, die, wenn sie durch einen Prozessor ausgeführt werden, den Prozessor dazu veranlassen, Vorgänge durchzuführen, die Folgendes umfassen:
Erlangen (300, 300-1) eines erfassten Bildes einer physischen Umgebung, die eine Vorrichtung für erweiterte Realität, AR-Vorrichtung, umgibt, über eine Kamera, wobei das erfasste Bild ein Objekt in der physischen Umgebung enthält;
Empfangen (300, 300-2) einer Spracheingabe von einem Benutzer der AR-Vorrichtung;
Identifizieren (310, 310-1) eines Blicks eines Benutzers;
Identifizieren (320, 320-1) eines Dienstes, der sich auf das Objekt bezieht, das in dem erfassten Bild enthalten ist, der basierend auf der Spracheingabe durchzuführen ist, wobei das Objekt dem Blick des Benutzers entspricht;
Identifizieren (320, 320-2) einer Bedingung für ein Bereitstellen des Dienstes, wobei sich die Bedingung für ein Bereitstellen des Dienstes auf mindestens eines von Folgenden bezieht: eine Zielgenauigkeit des Dienstes, eine Ziellatenz des Dienstes, eine Berechnungsmenge eines Modells künstlicher Intelligenz, das für Objekterkennung zu verwenden ist, oder einen Kommunikationszustand der AR-Vorrichtung;
basierend auf der Bedingung für ein Bereitstellen des Dienstes, Auswählen (340, 340-1) eines von einem ersten Modell künstlicher Intelligenz in der AR-Vorrichtung, einem zweiten Modell künstlicher Intelligenz in einer externen elektronischen Vorrichtung, die mit der AR-Vorrichtung verbunden ist, oder einem dritten Modell künstlicher Intelligenz in einem Server, wobei jedes von dem ersten Modell künstlicher Intelligenz in der AR-Vorrichtung, dem zweiten Modell künstlicher Intelligenz in der externen elektronischen Vorrichtung, die mit der AR-Vorrichtung verbunden ist, und dem dritten Modell künstlicher Intelligenz in dem Server für Objekterkennung trainiert ist, und
wobei sich das erste Modell künstlicher Intelligenz, das zweite Modell künstlicher Intelligenz und das dritte Modell künstlicher Intelligenz in Genauigkeit unterscheiden;
Erlangen (360, 360-1), zum Bereitstellen des Dienstes, eines Objekterkennungsergebnisses des Objekts aus dem ausgewählten Modell künstlicher Intelligenz; und
Bereitstellen des Dienstes für den Benutzer.

## Revendications

1. Procédé réalisé par un dispositif de réalité augmentée, RA, comprenant une caméra, le procédé comprenant :
l'acquisition (300, 300-1), par l'intermédiaire de la caméra, d'une image capturée d'un environnement physique entourant le dispositif RA, l'image capturée comprenant un objet dans l'environnement physique ;
la réception d'une entrée vocale (300, 300-2) en provenance d'un utilisateur du dispositif RA ;
l'identification (310, 310-1) d'un regard de l'utilisateur ;
l'identification (320, 320-1) d'un service lié à l'objet compris dans l'image capturée, à réaliser sur la base de l'entrée vocale, ledit objet correspondant au regard de l'utilisateur ;
l'identification (320, 320-2) d'une condition pour fournir le service, ladite condition pour fournir le service étant liée à au moins un parmi : une précision cible du service, une latence cible du service, une quantité de calcul d'un modèle d'intelligence artificielle à utiliser pour la reconnaissance d'objet ou un état de communication du dispositif RA ;
sur la base de la condition de fourniture du service, la sélection (340, 340-1) de l'un d'un premier modèle d'intelligence artificielle dans le dispositif RA, d'un deuxième modèle d'intelligence artificielle dans un dispositif électronique externe connecté au dispositif RA, ou d'un troisième modèle d'intelligence artificielle dans un serveur, chacun du premier modèle d'intelligence artificielle dans le dispositif RA, du deuxième modèle d'intelligence artificielle dans le dispositif électronique externe connecté au dispositif RA et du troisième modèle d'intelligence artificielle dans le serveur étant entraîné pour la reconnaissance d'objet, et
ledit premier modèle d'intelligence artificielle, ledit deuxième modèle d'intelligence artificielle et ledit troisième modèle d'intelligence artificielle différant en termes de précision ;
l'acquisition (360, 360-1), pour fournir le service, d'un résultat de reconnaissance d'objet de l'objet à partir du modèle d'intelligence artificielle sélectionné ; et
la fourniture du service à l'utilisateur.

2. Procédé de la revendication 1, ledit procédé comprenant en outre l'acquisition (350, 350-1) d'une image partielle comprenant l'objet à partir de l'image capturée, l'image partielle possédant une taille correspondant au modèle d'intelligence artificielle sélectionné, et
ladite acquisition du résultat de reconnaissance d'objet comprenant l'acquisition du résultat de reconnaissance d'objet sur la base de l'image partielle.

3. Procédé de la revendication 2, ladite acquisition (360) du résultat de reconnaissance d'objet comprenant :
l'acquisition du résultat de reconnaissance d'objet à l'aide du premier modèle d'intelligence artificielle dans le dispositif RA, selon que le premier modèle d'intelligence artificielle dans le dispositif RA est sélectionné ;
la demande du résultat de reconnaissance d'objet tout en fournissant l'image partielle au dispositif électronique externe, selon que le deuxième modèle d'intelligence artificielle dans le dispositif électronique externe est sélectionné ; et
la demande du résultat de reconnaissance d'objet tout en fournissant l'image partielle au serveur par l'intermédiaire du dispositif électronique externe, selon que le troisième modèle d'intelligence artificielle dans le serveur est sélectionné.

4. Procédé de la revendication 1, ledit dispositif RA étant connecté au dispositif électronique externe par l'intermédiaire d'une communication sans fil à courte portée, et
ledit serveur étant connecté à au moins l'un du dispositif électronique externe ou du dispositif RA par l'intermédiaire d'une communication sans fil à longue portée.

5. Procédé de la revendication 1, ledit premier modèle d'intelligence artificielle dans le dispositif RA, ledit deuxième modèle d'intelligence artificielle dans le dispositif électronique externe et ledit troisième modèle d'intelligence artificielle dans le serveur comprenant de multiples couches de réseau neuronal et configurés de sorte qu'un nombre de bits d'une valeur de sortie d'une fonction d'activation et un nombre de bits d'un poids configuré entre les couches soient différents les uns des autres.

6. Procédé de la revendication 2, pour la reconnaissance d'objet en ce qui concerne de multiples images capturées comprenant l'image capturée, ledit modèle d'intelligence artificielle sélectionné pour reconnaître l'objet étant modifiable sur la base de la condition pour fournir le service, et
une taille de l'image partielle à utiliser par le modèle d'intelligence artificielle sélectionné étant modifiée selon que le modèle d'intelligence artificielle sélectionné est modifié.

7. Procédé de la revendication 2, comprenant en outre l'identification d'une résolution d'une image d'entrée configurée pour le modèle d'intelligence artificielle sélectionné, et
ladite acquisition de l'image partielle comprenant le recadrage de l'image partielle à partir de l'image capturée de sorte que l'image partielle possède la résolution identifiée.

8. Procédé de la revendication 1, ladite sélection de l'un des premier, deuxième et troisième modèles d'intelligence artificielle comprenant :
lorsqu'un état de communication du dispositif RA est stable, la sélection de l'un du deuxième modèle d'intelligence artificielle dans le dispositif électronique externe ou du troisième modèle d'intelligence artificielle dans le serveur, et
lorsque l'état de communication du dispositif RA est instable, la sélection du premier modèle d'intelligence artificielle dans le dispositif RA.

9. Procédé de la revendication 1, ladite sélection de l'un des premier, deuxième et troisième modèles d'intelligence artificielle comprenant :
lorsque l'objet est un texte et que le service est un service de traduction, la sélection de l'un du deuxième modèle d'intelligence artificielle dans le dispositif électronique externe ou du troisième modèle d'intelligence artificielle dans le serveur, et
lorsque l'objet est le texte et que le service est un service de recherche de mots, la sélection du premier modèle d'intelligence artificielle dans le dispositif RA.

10. Procédé de la revendication 1, ladite précision cible et ladite latence cible étant modifiées en fonction du maintien ou non du regard de l'utilisateur par rapport à l'objet.

11. Dispositif de réalité augmentée, RA (1000) comprenant :
une interface de communication (1600) configurée pour communiquer avec un dispositif électronique externe (2000) ;
une caméra (1400) ;
un capteur de suivi de regard (1500) configuré pour détecter un regard d'un utilisateur ;
un processeur (1800) ; et
une mémoire (1700) stockant des instructions qui, lorsqu'elles sont exécutées par le processeur, amènent le dispositif RA à :
acquérir (300, 300-1), par l'intermédiaire de la caméra, une image capturée d'un environnement physique entourant le dispositif RA, l'image capturée comprenant un objet dans l'environnement physique ;
identifier (310, 310-1) le regard de l'utilisateur ;
recevoir une entrée vocale (300, 300-2) ;
identifier (320, 320-1) un service lié à l'objet compris dans l'image capturée, à réaliser sur la base de l'entrée vocale, ledit objet correspondant au regard de l'utilisateur ;
identifier (320, 320-2) une condition pour fournir le service, ladite condition pour fournir le service étant liée à au moins un parmi : une précision cible du service, une latence cible du service, une quantité de calcul d'un modèle d'intelligence artificielle à utiliser pour la reconnaissance d'objet, ou un état de communication du dispositif RA ;
sur la base de la condition de fourniture du service, sélectionner (340, 340-1) l'un d'un premier modèle d'intelligence artificielle dans le dispositif RA, d'un deuxième modèle d'intelligence artificielle dans un dispositif électronique externe connecté au dispositif RA, ou d'un troisième modèle d'intelligence artificielle dans un serveur, chacun du premier modèle d'intelligence artificielle dans le dispositif RA, du deuxième modèle d'intelligence artificielle dans le dispositif électronique externe connecté au dispositif RA et du troisième modèle d'intelligence artificielle dans le serveur étant entraîné pour la reconnaissance d'objet, et
ledit premier modèle d'intelligence artificielle, ledit deuxième modèle d'intelligence artificielle et ledit troisième modèle d'intelligence artificielle différant en termes de précision ;
acquérir (360, 360-1), pour fournir le service, un résultat de reconnaissance d'objet de l'objet à partir du modèle d'intelligence artificielle sélectionné ; et
fournir le service à l'utilisateur.

12. Dispositif RA de la revendication 11, ladite mémoire stockant des instructions qui, lorsqu'elles sont exécutées par le processeur, amènent le dispositif RA à :
acquérir (350, 350-1) une image partielle comprenant l'objet à partir de l'image capturée, l'image partielle possédant une taille correspondant au modèle d'intelligence artificielle sélectionné, et
acquérir le résultat de reconnaissance d'objet sur la base de l'image partielle.

13. Dispositif RA de la revendication 12, ladite mémoire stockant des instructions qui, lorsqu'elles sont exécutées par le processeur, amènent le dispositif RA à :
acquérir le résultat de reconnaissance d'objet à l'aide du premier modèle d'intelligence artificielle dans le dispositif RA, selon que le premier modèle d'intelligence artificielle dans le dispositif RA est sélectionné ;
demander le résultat de reconnaissance d'objet tout en fournissant l'image partielle au dispositif électronique externe, selon que le deuxième modèle d'intelligence artificielle dans le dispositif électronique externe est sélectionné ; et
demander le résultat de reconnaissance d'objet tout en fournissant l'image partielle au serveur par l'intermédiaire du dispositif électronique externe, selon le troisième modèle d'intelligence artificielle dans le serveur sélectionné.

14. Procédé de la revendication 11, ledit premier modèle d'intelligence artificielle dans le dispositif RA, ledit deuxième modèle d'intelligence artificielle dans le dispositif électronique externe et ledit troisième modèle d'intelligence artificielle dans le serveur comprenant de multiples couches de réseau neuronal et étant configurés de sorte qu'un nombre de bits d'une valeur de sortie d'une fonction d'activation et un nombre de bits d'un poids configuré entre les couches soient différents les uns des autres.

15. Support d'enregistrement lisible par ordinateur stockant des instructions qui, lorsqu'elles sont exécutées par un processeur, amènent le processeur à réaliser des opérations comprenant :
l'acquisition (300, 300-1), par l'intermédiaire d'une caméra, d'une image capturée d'un environnement physique entourant un dispositif de réalité augmentée, RA, l'image capturée comprenant un objet dans l'environnement physique ;
la réception (300, 300-2) d'une entrée vocale en provenance d'un utilisateur du dispositif RA ;
l'identification (310, 310-1) d'un regard d'un utilisateur ;
l'identification (320, 320-1) d'un service lié à l'objet compris dans l'image capturée, à réaliser sur la base de l'entrée vocale, ledit objet correspondant au regard de l'utilisateur ;
l'identification (320, 320-2) d'une condition pour fournir le service, ladite condition pour fournir le service étant liée à au moins un parmi : une précision cible du service, une latence cible du service, une quantité de calcul d'un modèle d'intelligence artificielle à utiliser pour la reconnaissance d'objet ou un état de communication du dispositif RA ;
sur la base de la condition de fourniture du service, la sélection (340, 340-1) de l'un d'un premier modèle d'intelligence artificielle dans le dispositif RA, d'un deuxième modèle d'intelligence artificielle dans un dispositif électronique externe connecté au dispositif RA, ou d'un troisième modèle d'intelligence artificielle dans un serveur, chacun du premier modèle d'intelligence artificielle dans le dispositif RA, du deuxième modèle d'intelligence artificielle dans le dispositif électronique externe connecté au dispositif RA et du troisième modèle d'intelligence artificielle dans le serveur étant entraîné pour la reconnaissance d'objet, et
ledit premier modèle d'intelligence artificielle, ledit deuxième modèle d'intelligence artificielle et ledit troisième modèle d'intelligence artificielle différant en termes de précision ;
l'acquisition (360, 360-1), pour fournir le service, d'un résultat de reconnaissance d'objet de l'objet à partir du modèle d'intelligence artificielle sélectionné ; et
la fourniture du service à l'utilisateur.
